(19) Europäisches Patentamt
European Patent Office
Office européen des brevets

(11) **EP 2 632 150 B1**

(12) **FASCICULE DE BREVET EUROPEEN**

(45) Date de publication et mention
de la délivrance du brevet:
**08.05.2019 Bulletin 2019/19**

(51) Int Cl.:
*H04N 5/33* (2006.01)     *G01J 5/24* (2006.01)

(21) Numéro de dépôt: **13155702.7**

(22) Date de dépôt: **19.02.2013**

(54) **Procédé de correction de la dérive d'un détecteur de rayonnement infrarouge comportant une matrice de bolometres résistifs d'imagerie et dispositif mettant en oeuvre un tel procédé**

Korrekturverfahren der Abweichung eines Infrarotsensors, der eine Matrix aus bildgebenden Widerstandsbolometern umfasst, und Vorrichtung zur Umsetzung dieses Verfahrens

Method for correcting the drift of an infrared radiation detector comprising an array of resistive imaging bolometers and device implementing such a method

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.02.2012 FR 1251592**

(43) Date de publication de la demande:
**28.08.2013 Bulletin 2013/35**

(73) Titulaire: **ULIS**
**38113 Veurey Voroize (FR)**

(72) Inventeurs:
• **Durand, Alain**
**38500 VOIRON (FR)**
• **Vilain, Michel**
**38450 ST GEORGES DE COMMIERS (FR)**
• **Minassian, Christophe**
**38340 VOREPPE (FR)**

(74) Mandataire: **Cabinet Laurent & Charras**
**Le Contemporain**
**50 Chemin de la Bruyère**
**69574 Dardilly Cedex (FR)**

(56) Documents cités:
**FR-A1- 2 934 679     FR-A1- 2 936 052**
**FR-A1- 2 951 895     US-B2- 7 030 378**

**Description**

**DOMAINE DE L'INVENTION**

La présente invention a trait au domaine de l'imagerie et de la thermographie infrarouge bolométrique.

Plus précisément, la présente invention concerne un procédé de correction de la dérive de calibration d'un dispositif de détection infrarouge, ou détecteur, destiné à l'imagerie, ou à l'imagerie thermographique (mesure de température de la scène basée sur l'énergie thermique radiative reçue) d'un rayonnement infrarouge à partir d'une matrice de bolomètres résistifs dits d'imagerie.

**ETAT ANTERIEUR DE LA TECHNIQUE**

Dans le domaine de l'imagerie et de la thermographie infrarouge, il est classique de mettre en oeuvre des détecteurs fonctionnant au voisinage de la température ambiante, ce terme recouvrant par exemple des températures comprises entre - 40 °C et + 90 °C, dits « non refroidis ». Ces détecteurs peuvent être régulés en température au niveau de leur plan focal, typiquement à l'aide d'un module Peltier (« *TEC* » en anglais). Le plus généralement, le plan focal est au contraire libre de varier en température (ou « *TEC-less* » en littérature anglo-saxonne). Ces dispositifs utilisent la variation d'une grandeur physique d'un matériau approprié, en fonction de la température, au voisinage de 300K. Dans le cas le plus répandu des détecteurs dits bolométriques, cette grandeur physique est la résistivité électrique.

Un détecteur élémentaire d'un tel dispositif de détection associe généralement :

- des moyens d'absorption du rayonnement infrarouge et de conversion de celui-ci en chaleur ;
- des moyens d'isolation thermique du détecteur, de telle sorte à permettre à celui-ci de s'échauffer sous l'action du rayonnement infrarouge ;
- des moyens de thermométrie qui, dans le cadre d'un détecteur bolométrique, mettent en oeuvre un élément résistif ;
- et des moyens de lecture des signaux électriques fournis par les moyens de thermométrie.

Les détecteurs destinés à l'imagerie infrarouge de ce type sont classiquement réalisés sous la forme d'une matrice bidimensionnelle de détecteurs élémentaires, ou bolomètres, chaque détecteur élémentaire de ladite matrice étant formé d'une membrane suspendue via des bras de soutien au dessus d'un substrat support de fabrication collective. Une telle matrice de détecteurs élémentaires est usuellement désignée sous l'expression de « rétine » d'imagerie.

Il est par ailleurs ménagé dans le substrat, usuellement en silicium, des moyens électroniques d'adressage séquentiel des détecteurs élémentaires, et de formation d'un signal électrique en relation avec chaque bolomètre, puis éventuellement de traitement plus ou moins élaboré dudit signal. L'ensemble de l'électronique directement connectée aux bolomètres est connu sous l'appellation « circuit de lecture » (ou désigné par l'acronyme anglo-saxon ROIC pour « Read Out Integrated Circuit »).

Pour obtenir l'image d'une scène par l'intermédiaire de ce détecteur, l'image de la scène est projetée à travers une optique adaptée sur la matrice de détecteurs élémentaires, cette matrice étant placée dans le plan focal de l'optique. Des stimuli électriques cadencés sont appliqués par l'intermédiaire du circuit de lecture à chacun des détecteurs élémentaires, ou à chaque rangée de tels détecteurs, afin d'obtenir un signal électrique constituant l'image de la température atteinte par chacun desdits détecteurs élémentaires. Ce signal électrique directement lié à la résistance électrique de chaque détecteur élémentaire est utilisé par le système applicatif dans lequel le détecteur est intégré, pour former l'image thermique de la scène observée. Un tel système est appelé par convention « caméra ».

Or, il est généralement observé que les matériaux bolométriques habituellement utilisés pour la fabrication d'un bolomètre d'imagerie, comme par exemple du silicium amorphe (a-Si), de l'alliage de silicium et de germanium (a-$Si_xGe_{1-x}$) ou de l'oxyde de vanadium ($VO_x$), présentent une dérive de leur résistance électrique plus ou moins prononcée en fonction du temps, pour des conditions d'exposition correspondant à l'usage normal du détecteur.

De manière encore plus critique, on constate également une dérive lorsque ces détecteurs ont été momentanément irradiés par une source très intense dans l'infrarouge, par exemple le soleil ou des sources radiatives puissantes (projecteurs, etc.). On parle dans ce cas plutôt de « rémanence », car la « dérive » ne concerne pas l'ensemble des points élémentaires du détecteur, mais seulement les zones correspondant à l'image de la source chaude à travers l'optique, qui forment une « image » rémanente après que la source à l'origine de cette empreinte ait disparu. On parle souvent dans ce cas « d'image fantôme » (ou « *ghost image* » ou encore « *sunburn* » dans la littérature anglo-saxonne), qui disparait plus ou moins rapidement avec le temps, car le matériau sensible des points d'image concernés par cette irradiation élevée a été modifié temporairement, puis revient plus ou moins rapidement vers son état avant irradiation. Ces artefacts sont préjudiciables à la qualité de l'image, et surtout dérèglent localement la calibration du détecteur, c'est-à-dire le rapport entre le signal en sortie et la température de la scène observée.

Dans le cadre de la présente invention, le terme général de « dérive » d'un bolomètre caractérise le fait que, pour des conditions environnementales et de fonctionnement données, désignées ci-après par l'expression « conditions de référence », comme par exemple le rayonnement incident sur le bolomètre, la température ambiante pour celui-ci (température interne de la caméra) et les signaux électriques de lecture, les caractéristiques électriques du bolomètre se sont écartées au cours du temps de leur valeur initiale, dites de référence, qui se manifestent dans de telles conditions, notamment lors d'une opération particulière d'acquisition en usine dite de calibration, avant la mise en service opérationnelle du détecteur.

Dans le cadre de l'invention, l'écart constaté entre le signal obtenu lors de l'opération de calibration et le signal qui serait obtenu à un instant quelconque ultérieur lors de la vie du détecteur s'il était replacé exactement dans les mêmes conditions, est appelé « dérive », qu'il s'agisse d'une variation liée à une évolution lente, en général uniforme spatialement, des caractéristiques de sensibilité de l'ensemble des bolomètres du détecteur, en relation avec la relative instabilité naturelle des matériaux thermométriques traditionnellement mis en oeuvre, ou des variations beaucoup plus rapides (lors de leur apparition, puis de leur relaxation ultérieure) distribuées spatialement et variables temporellement, résultant de l'observation trop prolongée d'une source de rayonnement intense.

Pour bien introduire ce qui suit, il convient de détailler le processus dit de calibration le plus courant de l'état de la technique.

Très généralement, ce processus de calibration comporte l'élaboration des paramètres bidimensionnels de corrections (usuellement appelés « tables ») d'offsets et de gains de la rétine matricielle qui sont ensuite utilisées au cours du fonctionnement du détecteur pour corriger les dispersions des caractéristiques des bolomètres.

La table d'offsets est obtenue en mesurant et mémorisant l'ensemble des signaux de sortie obtenus devant une première scène de température uniforme (par exemple un corps noir de référence porté à une première température $T1$). Le signal de sortie (ou niveau continu) est désigné par $NC_{T1}$, et le signal particulier d'un bolomètre de coordonnées $(i,j)$ dans la matrice de bolomètres est désigné par $NC_{T1}(i,j)$. La table d'offsets rassemble ainsi simplement l'ensemble des valeurs $NC_{T1}(i,j)$, qui représentent la distribution (la dispersion) du signal de sortie dans ces conditions de référence.

Le détecteur est ensuite placé devant une seconde scène de température uniforme différente, par exemple un second corps noir de référence porté à une seconde température $T2$, et une nouvelle table $NC_{T2}(i,j)$ est acquise et mémorisée.

La table de gains de référence $G_{ref}(i,j)$ définie par la relation :

$$G_{ref}(i,j) = \frac{\overline{NC_{T2}} - \overline{NC_{T1}}}{NC_{T2}(i,j) - NC_{T1}(i,j)}$$

est ensuite calculée à partir des tables $NC_{T1}(i,j)$, $NC_{T2}(i,j)$, et des moyennes algébriques respectives $\overline{NC_{T1}}$ et $\overline{NC_{T2}}$ de ces tables. Dans la suite du document, la notation de type $\overline{V}$, où $V$ est une « table » de valeurs scalaires de mêmes dimensions que la rétine, représente la moyenne algébrique de ladite table.

La table $G_{ref}(i, j)$ représente la distribution (dispersion) relative de la réponse ou responsivité (« *responsivity* » dans la littérature anglo-saxonne) de l'ensemble des bolomètres de la rétine.

Ces tables d'offsets et de gains, résultats de la calibration, sont mémorisées dans la caméra et utilisées, après sa mise en service, par une unité de calcul intégrée à la caméra pour pratiquer la traditionnelle « correction deux points » de chaque signal brut $S(i, j)$ de chaque trame d'image, pour obtenir le signal corrigé $S_{corr}(i, j)$ selon la relation :

$$S_{corr}(i, j) = G_{ref}(i, j).\left(S(i, j) - NC_{T1}(i, j)\right) + \overline{NC_{T1}}$$

Chaque signal brut $S(i, j)$ est ainsi corrigé de son écart individuel par rapport à la moyenne de l'imageur en termes d'offset et de gain.

Habituellement, la caméra est pourvue d'un obturateur (« *shutter* »), interposé entre l'optique et le plan focal sensible, destiné à former l'équivalent d'une scène thermique uniforme à la température de l'obturateur. Lorsqu'il est jugé que le signal de sortie $S_{corr}(i, j)$ n'est plus assez précis, par exemple à cause d'une dérive de température ou de la dispersion de température du plan focal, notamment pour les détecteurs « *TEC-less* » dépourvus de régulation de température, ou en raison des petites dérives individuelles ou globales des bolomètres, l'obturateur est activé, et la table d'offsets $NC_{T1}$ est mise à jour, par exemple remplacée, par une nouvelle table $NC_{shut}$ des signaux bruts de sortie correspondant à l'obturateur fermé.

L'usage traditionnel d'un obturateur procure ainsi un moyen simple et précis de formation de tables d'offsets de bonne qualité. Cependant l'observation d'une scène naturellement essentiellement uniforme à température ambiante, sans obturateur, ou la mise en oeuvre d'un moyen d'uniformisation du rayonnement de scène, par exemple par défocalisation de l'image, est également praticable dans le cadre de l'invention. Par la suite pour simplifier les notations, on écrira que la table $NC_{shut}$ « correspond à l'obturateur » sans que cela implique nécessairement la présence d'un obturateur mécanique.

Les images obtenues après réouverture de l'obturateur sont alors de nouveau efficacement corrigées à l'aide de la nouvelle table d'offsets.

Usuellement, il est considéré qu'il n'est pas nécessaire de mettre à jour la table de gains, car les phénomènes physiques à l'origine des dispersions relatives de réponse, par rapport à la valeur moyenne, ne varient pratiquement pas pendant toute la durée de vie du détecteur.

En effet, la réponse *Resp* d'un bolomètre polarisé en tension, (c'est-à-dire soumis à une tension constante et sans autre contrainte extérieure sur le courant circulant dans le bolomètre), s'exprime de manière générique par l'expression suivante :

$$Resp = \frac{\partial S}{\partial \theta_{scène}} \propto \frac{1}{R_{ac}} A \times \varepsilon \times TCR \times R_{th} \times \frac{\partial \Phi(\theta_{scène})}{\partial \theta_{scène}} \qquad (1)$$

où :

- $R_{ac}$ est la résistance électrique du bolomètre ;
- $A$ est l'aire du bolomètre dédiée à l'absorption du rayonnement ;
- $R_{th}$ est la résistance thermique entre la membrane du bolomètre et le substrat au dessus duquel elle est suspendue ;
- $\varepsilon$ est le coefficient de couplage (ou d'absorption) optique efficace de la membrane ;
- $TCR$ est le coefficient de variation de la résistance électrique du bolomètre en fonction de sa température ;
- $\Phi$ est le flux d'énergie radiative incident sur le bolomètre ; et
- $\theta_{scène}$ est la température de scène

La réponse est donc déterminée pour une part par des paramètres architecturaux ou de design, tels que l'aire $A$, la résistance thermique $R_{th}$, le coefficient $\varepsilon$, et divers paramètres de l'optique équipant le détecteur apparaissant dans le dernier terme $\Phi(\theta_{scène})$. Or, on constate que la valeur de ce premier groupe de paramètres, auquel on peut ajouter les paramètres du circuit de lecture destinés à la formation du signal brut $S(i, j)$, n'évolue pas sensiblement dans le temps et reste donc sensiblement constante tout au long de la vie du détecteur.

Un autre groupe de paramètres intervient cependant dans la réponse du bolomètre, sous la forme des caractères liés au matériau thermométrique de celui-ci, à savoir sa résistance électrique $R_{ac}$ (à travers sa résistivité $\rho$), et son coefficient de variation relative de résistance avec la température $TCR$ défini par la relation :

$$TCR = \frac{1}{R_{ac}} \cdot \frac{\partial R_{ac}}{\partial T} \qquad (2)$$

où $T$ est la température de la membrane du bolomètre.

Ces paramètres de matériau sont eux susceptibles de dériver de manière significative, comme il a déjà été signalé. En particulier, la résistance électrique $R_{ac}$ des matériaux usuels en bolométrie (oxydes de vanadium et silicium amorphe essentiellement) peut intrinsèquement varier de quelques pourcents sur la durée de vie du détecteur. Cette résistance peut également varier sous l'effet d'un échauffement particulièrement élevé provoqué par une irradiation infrarouge intense et/ou prolongée, ce qui est plus préjudiciable en termes de qualité d'image du fait que la perturbation ne concerne en général qu'une partie de la rétine. Il se forme donc sur l'image une tache de contraste « artificielle » non liée à la scène, qui disparait après correction d'offset seul, c'est-à-dire après mise à jour de la correction « un point », mais sur laquelle la calibration thermographique initiale est faussée, car la table de gains initiale n'est plus exacte sur la partie de la rétine qui a été modifiée.

Ces variations ou dérives de calibration, peuvent être significatives en regard de la précision des images ou mesures thermiques qu'on entend réaliser. Ainsi donc, la table de gains utilisée dans la correction « deux points » nécessite d'être re-calibrée régulièrement si l'on souhaite une qualité d'image constante au cours de la vie du détecteur.

Il a ainsi été proposé des méthodes de correction de ces dérives, par exemple dans le document FR 2 936 052. Ce document enseigne, pour un détecteur équipé d'un obturateur et d'un module Peltier régulant la température du plan focal sur une température de référence, la correction d'une dérive de réponse (« responsivité ») liée aux variations temporelles ou spatiales des résistances bolométriques. Le principe mis en oeuvre repose sur un dispositif comportant une résistance de référence, elle-même sujette à la dérive considérée, et des moyens de mesure de la dérive de cette résistance de référence par rapport à sa valeur initiale. Ces moyens sont activés à chaque fois qu'une mise à jour de la table de gains est jugée nécessaire en raison d'une dérive de la réponse des bolomètres. La correction consiste, alors que le détecteur est en « service », à acquérir les signaux bruts correspondant à l'obturateur, à déduire de ces signaux une évolution relative de cette résistance de référence par rapport à sa valeur initiale puis à multiplier les gains de la table de gains courante par un facteur proportionnel à ladite évolution relative.

Par détecteur en « service », il convient de comprendre que la correction peut être effectuée alors que la caméra est par exemple à la disposition de l'utilisateur, par une procédure ne faisant pas appel aux méthodes de calibration appliquées par le constructeur en usine, notamment à l'aide de corps noirs.

La correction pratiquée peut être globale (unique et valable sur l'ensemble de la rétine) ou individuelle (adaptée à chaque point sensible) dans le cas où la résistance de référence est le bolomètre lui-même. La table de gains ainsi actualisée est ensuite appliquée à la correction, par exemple numérique, des signaux bruts. Il est ainsi obtenu une correction substantielle des erreurs liées à la dérive de réponse.

Cette méthode est efficace, en ce sens qu'elle élimine l'essentiel des écarts de calibration, et en cas de mise en oeuvre individuelle, également l'essentiel des dérives liées aux irradiations locales intenses.

Cependant, il est constaté que les perturbations spatiales de réponse de type « rémanents » faisant suite à une irradiation intense localisée ne sont pas parfaitement corrigées dans toutes les conditions de fonctionnement de la caméra. En effet, lorsque la température de l'obturateur lors de la calibration est proche de la température moyenne de la scène observée par la suite, l'image corrigée « deux points » qui résulte des tables d'offset et de gains actualisées est satisfaisante.

En revanche, lorsque la température de la caméra, et donc la température de l'obturateur, est éloignée de la température moyenne de scène, il subsiste après correction « deux points » une image fantôme bien visible des zones préalablement perturbées, en particulier sur des images à faible contraste thermique, qui tendent à être sur-corrigées, conduisant à une inversion du contraste local sur l'image après correction.

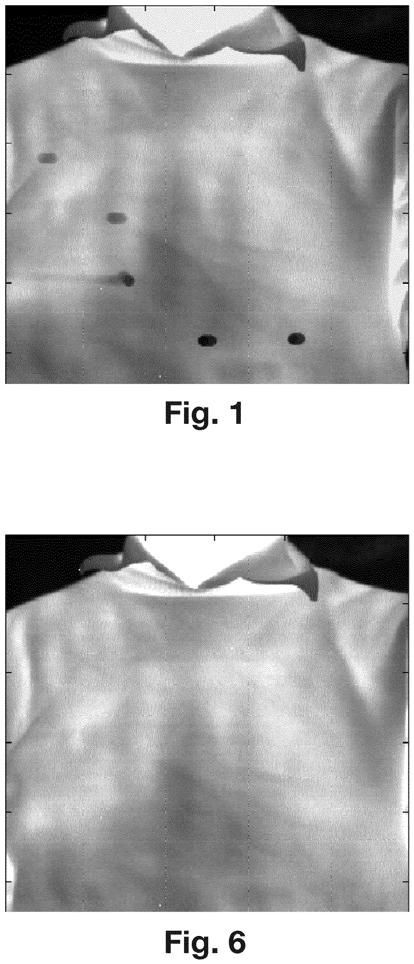

La figure 1 est une image thermique obtenue à partir d'un détecteur bolométrique de l'état de la technique à base de silicium amorphe mettant en oeuvre les enseignements du document FR 2 936 052 et illustrant le phénomène de sur-correction. L'image de la figure 1 est obtenue après une correction « deux points » de l'état de la technique, après que la table d'offsets ait été corrigée alors que la caméra, et donc l'obturateur, présentaient une température moyenne de 60 °C. La scène observée présente quant à elle une température moyenne de 30 °C. L'échelle de gris de cette image assigne une tonalité claire aux températures les plus élevées, la dynamique globale de l'image en termes de température de scène étant de l'ordre de 4 °C.

Les taches foncées sont les « images fantômes » avant la correction deux points, provenant de la présence du soleil dans le champ image du détecteur lors d'une mise en oeuvre antérieure à l'acquisition de l'image de la figure 1, selon diverses durées d'exposition, en plusieurs points de la rétine. Ces taches apparaîtraient en contraste très clair en l'absence de correction, mais apparaissent en contraste sombre sur l'image corrigée, ce qui signifie que ces taches sont sur-corrigées.

Cet exemple du domaine de l'imagerie est également illustratif de la limitation de l'art antérieur dans le domaine de la thermographie. En effet, l'estimation de température de scène qui serait extraite des points situés dans les zones perturbées sera faussée par rapport à la mesure correcte fournie par les points environnants non perturbés.

Ces défauts d'imagerie et de calibration sont corrigeables au moyen d'une re-calibration du détecteur en usine, en réitérant le processus d'exposition devant deux corps noirs à deux températures de référence *T1* et *T2,* pour déterminer une nouvelle table de gains comme précédemment décrit. Cependant, outre que cette opération complexe est impossible à mettre en oeuvre pour les systèmes en service, du fait qu'il faut replacer la caméra dans les mêmes conditions thermiques que lors de la calibration, il conviendrait de la reproduire de manière répétitive lors des phases de retour vers l'équilibre (dit relaxation) après irradiation excessive. De fait, cette solution n'est pas envisageable sans une mise hors service prolongée de la caméra.

Le document US 7 030 378 propose une approche « de terrain » basée sur deux mesures comparées des résistances électriques des bolomètres, obtenues à deux températures différentes de fonctionnement de la caméra elle-même, après calibration initiale en usine. Outre que cette méthode nécessite une variation élevée de cette température pour produire un résultat exploitable, elle n'est pas en mesure de fournir une solution au problème posé de précision insuffisante de calibration lorsque l'obturateur est porté à une température très différente de la scène.

Il subsiste donc un besoin manifeste de disposer d'une méthode adéquate pour l'élimination substantielle des erreurs résiduelles de calibration, et plus précisément des artefacts nuisibles en imagerie et thermographie consécutifs à des périodes d'exposition excessive à un rayonnement thermique intense, toujours constatés après correction selon l'état de l'art.

De plus, il subsiste un besoin de disposer d'un protocole de correction de dérive et desdits artefacts qui ne nécessite pas de recourir à des conditions particulières, nécessitant la mise hors service prolongée du détecteur.

Il subsiste également un besoin de proposer un protocole de correction de dérive ou desdits artefacts applicable aux caméras en service pourvues d'une circuiterie de lecture standard de l'état de la technique, et de surcroît valide quelle que soit la mise en oeuvre thermique du détecteur, c'est-à-dire de type régulé en température de plan focal, ou non régulé (« *TEC-Less* »).

## EXPOSE DE L'INVENTION

Le but de la présente invention est donc de proposer une méthode de correction des signaux de sortie d'un détecteur bolométrique, capable de substantiellement maintenir la précision initiale de calibration sur toute la durée de vie du détecteur, sans images fantômes résiduelles (artefacts d'imagerie) en cas d'irradiation excessive, malgré les dérives temporelles et/ou spatiales inhérentes au matériau bolométrique utilisé dans le détecteur, et dans toutes les conditions opérationnelles de la caméra en termes de température ambiante.

A cet effet, l'invention a pour objet un procédé de correction d'une table de gains utilisée dans une correction d'une dispersion en réponse de bolomètres résistifs d'une rétine de bolomètres résistifs suspendue au dessus d'un substrat d'un détecteur bolométrique, ladite correction étant appliquée à des signaux bruts de lecture issus desdits bolomètres, et chaque gain de la table de gains étant associé à un bolomètre de la rétine.

Selon l'invention, le procédé consiste :

- à acquérir des signaux de lecture de la rétine correspondant à une scène sensiblement uniforme en température ;
- à calculer une table de correction g de la table de gain en fonction des signaux de lecture acquis selon la relation :

$$g(i,j) = \frac{R_{ac\_shut}(i,j)}{R_{ac\_ref}(i,j)} \cdot \frac{TCR_{ref}(i,j)}{TCR_{shut}(i,j)}$$

- et à corriger la table de gains selon la relation :

$$G_{shut}(i,j) = \frac{g(i,j).G_{ref}(i,j)}{N}$$

expressions dans lesquelles :

- (*i, j*) représentent les coordonnées des bolomètres dans la rétine et les tables ;
- $G_{ref}$ et $G_{shut}$ sont respectivement la table de gains avant correction et la table de gains corrigée ;
- $R_{ac\_shut}(i,j)$ est la valeur de résistance du bolomètre de coordonnées (*i, j*) à l'instant d'acquisition des signaux de lecture ;
- $R_{ac\_ref}(i,j)$ est une valeur de la résistance du bolomètre de coordonnées (*i, j*) à un instant antérieur ;
- $TCR_{shut}(i,j)$ est une valeur du coefficient de variation en température du bolomètre de coordonnées (*i, j*) à l'instant d'acquisition des signaux de lecture ;
- $TCR_{ref}(i, j)$ est une valeur du coefficient de variation en température du bolomètre de coordonnées (*i, j*) à l'instant antérieur ; et
- *N* est un facteur scalaire de normalisation de la table de gains $G_{shut}$.

Le facteur *N* est avantageusement égal à la moyenne algébrique de tous les éléments du numérateur *N(i, j)* = *g(i, j).G$_{ref}$(i, j)*, auquel cas, on a :

$$G_{shut}(i,j) = \frac{g(i,j).G_{ref}(i,j)}{\overline{g(i,j).G_{ref}(i,j)}} = \frac{g(i,j).G_{ref}(i,j)}{\overline{N(i,j)}} = \frac{g(i,j).G_{ref}(i,j)}{N}$$

L'invention a également pour objet un détecteur bolométrique comportant des moyens de mise en oeuvre du procédé précité.

Selon un mode de réalisation de l'invention, le matériau bolométrique des bolomètres résistifs est du silicium amorphe ou un alliage de silicium-germanium, les valeurs $R_{ac\_ref}(i, j)$ sont des valeurs de résistance des bolomètres

$$\beta(i,j) = \frac{TCR_{ref}(i,j)}{TCR_{shut}(i,j)}$$

pour une température moyenne $T_{ref}$ de ceux-ci, et le terme      est calculé selon la relation :

$$\beta(i,j) = \frac{1}{1 + \dfrac{K}{E_{a\_ref}} \cdot \ln\left(\dfrac{R_{ac\_shut}(i,j)}{R_{ac\_ref}(i,j)@T_{shut}}\right)} \cdot \frac{T_{shut}^2}{T_{ref}^2}$$

expression dans laquelle :

- $T_{shut}$ est une température moyenne des bolomètres à l'instant d'acquisition des signaux ;
- $K$ est un coefficient prédéterminé dépendant des bolomètres résistifs ;
- $E_{a\_ref}$ est une valeur prédéterminée de l'énergie d'activation des bolomètres ;
- ln est le logarithme népérien ; et
- $R_{ac\_ref}(i,j)@T_{shut}$ est une valeur à l'instant antérieur de la résistance du bolomètre de coordonnées $(i, j)$ pour la température $T_{shut}$.

En d'autres termes, les inventeurs ont constaté qu'il existe une relation entre la valeur de l'énergie d'activation au moins dans le cas d'un matériau bolométrique en silicium amorphe ou en alliage de silicium-germanium et sa résistance électrique. En connaissant la variation de la résistance électrique provoquée par une dérive des caractéristiques intrinsèques du matériau bolométrique, il est donc possible d'estimer une variation correspondante du coefficient $TCR$, et donc de re-calibrer la table de gains sans pour autant mettre en oeuvre des procédures classiques de re-calibration empirique à base de corps noirs de référence.

L'invention exploite donc avantageusement ladite relation. On comprendra qu'il existe de nombreuses manières d'exploiter une relation mathématique en fonction des signaux disponibles en sortie des circuits de lecture, de la puissance de calcul ou de l'espace mémoire des unités de calcul embarquées dans les caméras, du type de circuit analogique utilisé, etc.

L'invention couvre donc l'exploitation directe ou indirecte de cette relation dans le cadre de la détermination d'une table de gains. Notamment, l'invention met en oeuvre des estimateurs de grandeurs, étant entendu que ces grandeurs ne sont généralement pas directement mesurées, mais plutôt estimées en fonction des signaux disponibles en sortie de la rétine et de divers paramètres de fonctionnement du détecteur, comme par exemple des paramètres relatifs au type de polarisation utilisé, ou encore au type d'architecture utilisée pour « lire » les bolomètres de la rétine.

On notera par ailleurs que l'invention fait intervenir des températures. Comme il apparaîtra plus clairement ci-dessous, les diverses relations concernent, ou dérivent directement, du comportement en température des bolomètres eux-mêmes. En théorie donc, les températures sont celles des bolomètres. Mesurer la température d'un bolomètre se pratique typiquement à l'aide d'une mesure de sa résistance. Toutefois, il sera alors impossible de discriminer l'effet de la dérive de caractéristique des bolomètres qu'il est question de corriger. Il est dans ce contexte nécessaire d'estimer cette température par un autre moyen. Par exemple, une sonde de température peut être prévue à proximité de chaque bolomètre, ou une ou plusieurs sondes de températures peuvent être prévues pour mesurer la température du substrat en un ou plusieurs points de celui-ci. En effet, les membranes des bolomètres sont en relation thermique avec le substrat qui les porte, et sont donc en équilibre avec celui-ci, c'est-à-dire à une température moyenne proche de celle du substrat.

On entend par « température moyenne » la température effective sur une échelle de temps par exemple de quelques secondes à quelques minutes. Il est connu que la température instantanée (à l'échelle typiquement de quelques microsecondes) de la membrane d'un bolomètre est susceptible de variations rapides de quelques degrés lors de l'impulsion électrique de lecture, sous l'effet de l'auto-échauffement par effet Joule (également connu sous l'expression de « *self heating* ») qui se manifeste une fois par trame dans le cas le plus fréquent de la formation de signal par polarisation en mode balayé ligne par ligne, tel que décrit ultérieurement. L'équilibre en régime établi (après plusieurs trames) entre les phases d'auto-échauffement liées à la lecture, et de relaxation thermique entre trames vers la température du substrat, conduit à considérer une température moyenne en général supérieure de quelques degrés par rapport à celle du substrat. Cette différence apparait aussi en cas de polarisation continue, pour lequel les températures moyenne et instantanée sont équivalentes.

Cette différence de température moyenne est substantiellement constante, au moins tant que les stimuli de lecture ne sont pas modifiés. En particulier, elle apparait autant à l'instant dit « antérieur », qu'à l'instant dit « d'acquisition » des signaux dans l'exposé précédent, de sorte qu'il n'est pas nécessaire dans le cas général de la connaitre pour obtenir une très bonne correction selon l'invention. S'il était besoin à des fins par exemple de raffinement de la correction, cette différence pourrait être estimée et intégrée dans la mise en oeuvre de la méthode selon l'invention, par exemple sous forme de correction des grandeurs $T_{ref}$ et $T_{shut}$.

De par son principe même, la température du bolomètre dépend du rayonnement incident, c'est à dire de la température de la scène observée, de sorte que cette température de scène contribue à définir la température moyenne du bolomètre. Toutefois, cette contribution demeure très faible devant celle du substrat qui le porte, ordinairement de l'ordre de cent fois moins. Il en résulte qu'au moins dans le cas où les instants dits « antérieurs » et d'« acquisition » des signaux correspondent à des scènes dont la température n'est pas très éloignée de la température des bolomètres, par exemple moins de 20 °C, il n'y a pas de perturbation substantielle de la qualité de la correction selon l'invention. Cette condition est typiquement obtenue lorsque la caméra est équipée d'un obturateur, du fait que l'intérieur de la caméra est usuellement grossièrement isotherme. Par « grossièrement », il est entendu par exemple que le substrat peut lui-même présenter une température moyenne plus élevée que d'autres parties de la caméra, dont l'obturateur s'il y en a un, du fait de la dissipation thermique propre à son fonctionnement.

Ces petits écarts peuvent être négligés pour la mise en oeuvre satisfaisante de l'invention. Pour de plus gros écarts de température, on observe une correction de qualité inférieure mais qui permet cependant de réduire les phénomènes d'image fantôme décrit précédemment.

De manière avantageuse, la température des bolomètres est donc approximée par la température du substrat, qui constitue une estimation satisfaisante dans le cadre de l'invention. Aussi donc, la mesure de température du substrat en un point de celui-ci peut être considérée, du point de vue des bolomètres, comme une approximation satisfaisante de leur température. Dans ce qui suit, pour des raisons de clarté et de concision, il ne sera donc pas fait de distinction particulière entre la température des bolomètres et la température en un point du substrat, la nature des températures utilisées apparaissant distinctement du contexte. En outre, et conformément aux notations usuelles du domaine, la température du substrat peut également être désignée sous l'expression de « température plan focal » puisque le substrat est placé dans le plan focal d'une optique équipant le détecteur bolométrique ou « température du détecteur ».

Toutefois, dans le cas où un gradient spatial non négligeable de température, permanent ou variable de manière transitoire se manifesterait sur la portion de substrat portant la rétine sensible, il est avantageux de disposer plusieurs sondes de température en de multiples points du substrat permettant d'obtenir une estimation de la température du substrat à proximité de chaque bolomètre. Cette estimation est par exemple directement fournie de manière simple par le signal de la sonde la plus proche d'un bolomètre donné, avec une distribution spatiale des sondes selon un réseau régulier beaucoup moins dense que la matrice de bolomètres. Ce réseau est par exemple à maille carrée ou hexagonale, et étendu au moins sur une partie du substrat portant la rétine sensible.

De manière alternative plus raffinée si besoin, cette estimation est obtenue au moyen d'un modèle d'interpolation entre les points du réseau de sondes.

De manière à limiter le nombre de sondes nécessaires à la formation d'une estimation de température locale du substrat suffisamment fine, et qui évite de manière avantageuse l'insertion de sondes dans l'emprise de la circuiterie régulière de lecture disposée dans la zone sensible de la rétine, il est disposé par exemple en divers points périphériques à la rétine sensible, une pluralité de sondes fournissant chacune une mesure locale de température du substrat. Le ou les signaux de température sont exportés vers la sortie de manière classique, par exemple et typiquement après numérisation et intégration au flux de données vidéo. L'estimation de la distribution spatiale de température du substrat au voisinage de chaque bolomètre est ensuite formée au moyen d'un modèle thermique du détecteur intégré dans l'algorithme de correction selon l'invention.

Les grandeurs $T_{ref}$ et $T_{shut}$ apparaissant dans les expressions dérivées selon l'invention, en cas de mise en oeuvre de l'une des dispositions particulières précédentes ou leurs variantes que l'homme de l'art saura mettre en place sans sortir de l'esprit de l'invention, sont à remplacer par des grandeurs tabulées $T_{ref}(i, j)$ et $T_{shut}(i, j)$.

Selon l'état de la technique, l'application d'une table de gains est destinée à substantiellement annuler l'effet de la dispersion de réponse *Resp* brute de chaque élément bolométrique de la rétine autour de la valeur moyenne $\overline{Resp}$ des réponses de l'ensemble des éléments de la rétine. Ainsi, il est usuellement convenu que la table de gains est « normalisée », c'est-à-dire que sa valeur moyenne est par convention égale à 1.

La responsivité moyenne $\overline{Resp}$ calibrée comme expliqué précédemment permet de faire correspondre au signal corrigé, si cela est nécessaire pour l'application (cas de la thermographie par exemple), une température de scène. Le signal corrigé $S_{corr}$ fourni pour chaque bolomètre de la rétine par la caméra en service est alors transformé en signal thermométrique $\theta_{scene}(i, j)$, ou tout signal d'intérêt à produire, par la relation du type :

$$\theta_{scene}(i, j) = f\left(S_{corr}(i, j), \overline{Resp}\right) \qquad (3)$$

Typiquement, pour les systèmes de l'état de la technique dont le plan focal n'est pas régulé en température, il est habituellement nécessaire de mesurer et mémoriser en usine une série de responsivités $\overline{Resp}$ moyennes à plusieurs températures caractéristiques de la caméra, ou plus aisément, du plan focal (*TPF*). Autrement dit, il est usuel d'établir empiriquement la courbe de responsivité $\overline{Resp(TPF)}$ en fonction de la température du plan focal *TPF*, cette courbe étant destinée à fournir en fonctionnement une valeur de réponse moyenne pertinente à une température de caméra quelconque, par exemple par interpolation.

Les variations de responsivité dues aux variations de $R_{ac}$ et de *TCR* avec la température de caméra sont comprises dans la formation de cette courbe empirique de calibration en usine.

Il peut être procédé de même pour la table de gains à ces mêmes températures, de manière à mémoriser une série de tables $G_{ref}$ destinées à interpolation ultérieure en fonctionnement, de manière à baser les corrections selon l'invention sur une table $G_{ref}(TPF)$ plus précise.

Cependant, au moins dans le cas des détecteurs basés sur du silicium amorphe, ou d'alliages de silicium-germanium amorphes, il est avantageusement constaté qu'il n'est pas besoin d'acquérir plusieurs tables de gains. Au contraire, il est constaté qu'une table de gains obtenue lors de la phase initiale de calibration à une température $T_{ref}$ reste substantiellement pertinente, en dehors des problèmes dont l'invention entend fournir une solution, quelle que soit la température ultérieure de fonctionnement

Cependant encore, au moins dans le cas des détecteurs basés sur du silicium amorphe, ou d'alliages de silicium-germanium amorphes, il est avantageusement constaté qu'au moins dans le cas d'une excursion limitée de température autour de la valeur centrale ou la plus probable du domaine d'utilisation, il n'est pas besoin d'acquérir cette courbe. L'acquisition de la valeur de responsivité moyenne $\overline{Resp_{ref}}$ à une température $T_{ref}$ unique est suffisante, moyennant correction ultérieure en service de la responsivité moyenne au moyen d'une multiplication par le facteur scalaire de normalisation $N = \overline{g(i, j).Gref(i, j)}$ de la table de gains corrigée. Il en résulte une simplification substantielle du protocole de calibration initial et donc du coût de cette opération, compte tenu qu'il n'est pas non plus besoin, comme indiqué, d'acquérir plusieurs tables de gains lors de la calibration.

Dans ce contexte particulier thermographique, la connaissance directe de l'évolution de la calibration sans qu'il soit nécessaire d'en mesurer les variations avec la température est ainsi avantageuse. En effet, le scalaire *N* peut être directement exploité comme correctif pertinent de la réponse moyenne, c'est-à-dire mis en oeuvre au niveau de la relation (3).

Le document FR 2 936 052 ne fait pas appel à des tables de gains normalisées *G(i,j)* qui ne contiennent que la dispersion relative de responsivité, mais plutôt à des tables dimensionnées de responsivité (ou sensibilité *S*), reliant directement les signaux formés à partir de chaque élément de la rétine aux variations de température de scène. Les grandeurs *S(i,j)* du document antérieur correspondent donc aux grandeurs $G(i, j).\overline{Resp}$ du présent document. Dans le présent document, les corrections spatiales dispersives apparaissent donc sur la table de gain *G(i,j),* et les corrections de calibration (de responsivité / sensibilité) apparaissent, si utilisées, dans le facteur de normalisation *N* selon une correction globale de responsivité $Resp_{shut}=Resp_{ref}.N$. Le facteur *N* porte les corrections de dérive globale de caractéristiques de la rétine bolométrique, et/ou de dérive moyenne de température dans les systèmes non régulés.

Les inventeurs ont constaté, comme cela est illustré à la figure 1, que l'erreur résiduelle de calibration après correction selon la technique décrite dans le document FR 2 936 052, dans le cas où la température de la caméra, et donc de l'obturateur, au moment de la dernière calibration de la table de gains est très différente de celle de la scène observée ultérieurement, forme des perturbations locales bien nettes en relation directe avec les zones qui ont été précédemment fortement irradiées. Il est donc utile de corriger l'erreur de calibration au-delà d'une simple correction « au premier ordre » de la table de gains proposée dans ledit document.

En revenant à la relation (1), celle-ci exprime une double dépendance de la responsivité vis-à-vis du matériau bolométrique utilisé, à savoir d'une part une dépendance en fonction de la résistance $R_{ac}$, et d'autre part une dépendance en fonction du coefficient de variation en température *TCR*.

Les enseignements du document FR 2 936 052 corrigent la dépendance de la responsivité en fonction de la résistance $R_{ac}$.

Le concept sous-jacent à l'invention est de tenir compte également de la dépendance de la responsivité en fonction du coefficient *TCR* afin de corriger « au second ordre » les dérives globales ou locales de la rétine.

L'invention consiste ainsi à appliquer également une correction au second ordre d'une table de gains précédemment acquise $G_{ref}(i, j)$ pour obtenir une table de gains corrigée $G_{shut}(i, j)$ selon la relation :

$$G_{shut}(i, j) = \left[ G_{ref}(i, j).\frac{R_{ac\_shut}(i, j)}{R_{ac\_ref}(i, j)}.\frac{TCR_{ref}(i, j)}{TCR_{shut}(i, j)} \right] / N \qquad (4)$$

où :

- $G_{shut}(i, j)$ est la nouvelle table de gains, déterminée pour la température courante $T_{shut}$ du détecteur ;
- $R_{ac\_shut}(i, j)$ sont les valeurs des résistances des bolomètres à l'instant de détermination de la nouvelle table de gains $G_{shut}(i, j)$ et pour la température $T_{shut}$ à cet instant ;
- $R_{ac\_ref}(i, j)$ sont les valeurs de résistance des bolomètres à l'instant de détermination de la table de gains $G_{ref}$ et pour la température $T_{ref}$ à cet instant; et
- $TCR_{ref}(i, j)$ sont les valeurs des coefficients de variation en température à l'instant de détermination de la table de gains $G_{ref}$ et pour la température $T_{ref}$ à cet instant ;
- $TCR_{shut}(i, j)$ sont les valeurs des coefficients de variation en température à l'instant d'acquisition de la nouvelle table de gains $G_{shut}(i, j)$ et pour la température $T_{shut}$ ; et
- $N$ est un facteur de normalisation, avantageusement égal à la moyenne de tous les éléments du numérateur.

Toutefois, la mise en oeuvre d'une correction de la table de gains utilisant la relation **(4)** n'est pas simple. En effet, cela suppose de disposer de moyens pour mesurer les résistances $R_{ac}$ à la température $T_{shut}$ lorsque l'obturateur est fermé. Cette opération peut être considérée comme accessible, quoique cela implique que la configuration du circuit de lecture et de sa mise en oeuvre soient prévues dans ce sens.

Cette opération nécessite aussi d'acquérir les coefficients $TCR$ à la température $T_{shut}$ au moment de l'obturation du shutter. Les coefficients $TCR$ dépendant fortement de la température, l'acquisition directe de leur valeur en service nécessite de porter le plan focal de la caméra, et donc la rétine, à deux températures différentes, par exemple et typiquement au moyen d'un module Peltier (ou « *TEC* » pour « <u>*thermo electric cooler*</u> »). Les valeurs de $TCR$ de chaque bolomètre sont alors extractibles de deux mesures de résistance, à obturateur fermé, obtenues à ces deux températures. Outre le fait rédhibitoire que de plus en plus de détecteurs commerciaux sont dépourvus de module Peltier, cette opération est nécessairement très consommatrice de temps, et serait fort délicate au niveau opératoire pour obtenir la précision requise, puisqu'il est recherché une correction « du second ordre ».

L'invention propose donc un procédé de correction au second ordre des dérives globales ou locales de la rétine qui soit valable également pour les détecteurs non régulés en température et qui ne nécessite pas que les mesures soient réalisées à la même température, bien qu'évidemment l'invention soit également parfaitement applicable dans ces conditions.

Plus particulièrement, l'invention propose de déterminer la table de gains à la température courante du détecteur et de faire disparaître dans le ou les modèles analytiques utilisés toute référence aux coefficients $TCR$.

L'invention s'appuie sur une table de gains précédemment acquise, et cela même si cette table a été acquise à une autre température, y compris une température très éloignée de la température courante du détecteur. Comme cela sera détaillé par la suite, cette hypothèse de travail s'avère étonnamment très peu préjudiciable à la qualité de la correction au second ordre de la dérive des bolomètres.

Ensuite, dans le cas habituel où le matériau bolométrique utilisé pour former la résistance bolométrique est de type semi-conducteur, comme le sont par exemple le silicium amorphe et les alliages amorphes de silicium et de germanium, la résistance $R_{ac}$ d'un bolomètre se comporte en température de manière connue selon une loi d'Arrhenius :

$$R_{ac}(i, j) = R_{ac0}(i, j).\exp\left(\frac{Ea(i, j)}{k.T}\right) \qquad \textbf{(5)}$$

où :

- $Ea(i,j)$ est l'énergie d'activation de la résistivité du matériau bolométrique du bolomètre ;
- $R_{ac0}(i,j)$ est le paramètre de résistance asymptotique à température « infinie » de ce matériau ;
- $k$ est la constante de Boltzmann ; et
- $T$ est la température du matériau bolométrique du bolomètre.

Cette relation permet d'exprimer le coefficient $TCR(i, j) = \dfrac{1}{R_{ac}(i, j)}.\dfrac{\partial R_{ac}(i, j)}{\partial T}$ selon la relation :

$$TCR(i, j) = -q.\frac{Ea(i, j)}{k.T^2} \qquad \textbf{(6)}$$

où $q$ est la charge de l'électron, nécessaire lorsque $Ea$ est exprimé en électron-Volts

Ensuite, les inventeurs ont constaté qu'au moins dans le cas des matériaux silicium amorphe (a-Si) et des alliages amorphes de silicium et de germanium (a-Si$_x$Ge$_{1-x}$), l'énergie d'activation $Ea$ dépend de diverses caractéristiques intrinsèques du matériau particulier considéré, et que si ces caractéristiques ne changent pas, c'est-à-dire que si le matériau ne subit pas de dérive, l'énergie d'activation $Ea$ est sensiblement constante en température sur l'étendue des conditions de fonctionnement des détecteurs. En combinant les relations **(4)** et **(6),** la relation **(4)** peut ainsi être reformulée selon la relation :

$$G_{shut}(i,j) = \left[ G_{ref}(i,j) . \frac{R_{ac\_shut}(i,j)}{R_{ac\_ref}(i,j)} . \frac{Ea_{ref}(i,j)}{Ea_{shut}(i,j)} . \frac{T_{shut}^2}{T_{ref}^2} \right] / N \qquad \textbf{(7)}$$

où $Ea_{ref}(i, j)$ et $Ea_{shut}(i, j)$ sont respectivement les énergies d'activation des bolomètres à l'instant de détermination de la table $G_{ref}(i, j)$ et à l'instant de détermination de la nouvelle table $G_{shut}(i, j)$.

Selon la relation **(7),** l'information utile concernant la correction au second ordre est donc à présent contenue dans les énergies d'activation $Ea$.

Ensuite, le Demandeur a constaté que l'énergie d'activation $Ea$ suit de manière sensiblement réversible et reproductible la résistivité du matériau bolométrique, lorsque celle-ci est amenée à changer pour une raison autre qu'une variation de température. Pour une température du matériau donnée, il est donc possible d'estimer la variation de l'énergie d'activation $Ea$ d'un bolomètre à l'aide de la variation de la résistance $R_{ac}$ de celui-ci.

Plus particulièrement, lorsqu'un même bolomètre de résistance initiale $R_{ac\_init}(i, j)$ pour la température $T_{init}$, est modifié en raison d'une dérive, et acquiert une nouvelle valeur de résistance $R_{ac\_final}(i, j)$ pour cette même température $T_{init}$, qu'on notera $R_{ac\_final}(i, j)$, il a été constaté que les énergies d'activation respectives $Ea_{init}(i, j)$ et $Ea_{final}(i, j)$ du bolomètre avant et après la dérive obéissent sensiblement à la relation :

$$Ea_{final}(i,j) - Ea_{init}(i,j) = K(T_{init}) . \ln\left( \frac{R_{ac\_final}(i,j)}{R_{ac\_init}(i,j)} \right) \qquad \textbf{(8)}$$

ou alternativement :

$$\frac{Ea_{final}(i,j)}{Ea_{init}(i,j)} = 1 + \frac{K(T_{init})}{Ea_{init}(i,j)} . \ln\left( \frac{R_{ac\_final}(i,j)}{R_{ac\_init}(i,j)} \right) \qquad \textbf{(9)}$$

où $K$ est un facteur prédéterminé. La valeur du facteur $K$ est par exemple étalonnée expérimentalement pour le matériau mis en oeuvre pour l'élaboration de la rétine, en imposant une dérive délibérée de diverses amplitudes à un ou plusieurs bolomètres d'un dispositif de calibration, en mesurant les résistances et les énergies d'activation associées à ces divers états de dérive, et en extrayant le facteur $K$ de ces mesures, par les méthodes usuelles de linéarisation des relations **(8)** ou **(9).**

Dans la relation **(9),** le rapport des résistances est donné à $T_{init}$, cette valeur peut être arbitrairement fixée à $T_{final}$, l'important étant de comparer les résistances à une même température. Dans la suite, la température commune servant à l'établissement des formules de correction de la table de gains correspondra à la température finale $T_{final}$.

Pour la variété de silicium amorphe usuellement mis en oeuvre par le Demandeur, une valeur du facteur $K$ de l'ordre de 0,055 eV est typiquement pertinente. Pour d'autres matériaux, d'autres valeurs dans cet ordre de grandeur peuvent être mieux adaptées.

Comme indiqué dans les relations **(8)** et **(9),** il peut être utile, en relation avec le comportement particulier du matériau sensible mis en oeuvre, ou/et en cas d'excursion extrême de la température de fonctionnement du détecteur, d'exprimer une éventuelle variation du paramètre $K$ avec la température de l'élément sensible. L'étalonnage préalable expérimental du comportement $K(TPF)$ du matériau sensible en fonction de la température du plan focal $TPF$ permet ainsi d'affiner dans les relations **(8)** ou **(9)** la valeur du paramètre $K$ de correction ainsi noté $K(TPF),$ par exemple au moyen d'une expression polynomiale. Cependant, dans la plupart des cas de mise en oeuvre de silicium amorphe ou alliages amorphes de silicium-germanium, ce raffinement est superflu et l'usage d'un paramètre $K$ constant est adéquat.

Il convient de noter que les relations **(8)** et **(9)** n'imposent en rien un lien générique prédéfini entre la valeur de la résistance $R_{ac}$ et la valeur du coefficient $TCR$ ou la valeur de l'énergie d'activation $Ea$. Dit autrement, les relations **(8)** et **(9)** ne sont en aucun cas une reformulation de la loi d'Arrhenius exprimée par la relation **(5).** En effet, la résistance asymptotique $R_{ac0}$ et l'énergie d'activation $Ea$ n'ont pas de valeur fixe ou prédéterminée et dépendent de l'état particulier et momentané du matériau bolométrique. Ainsi par exemple, lorsque l'on mesure les énergies d'activation de bolomètres considérés comme identiques, c'est-à-dire formés d'un matériau sensible obtenu selon un procédé constant, voire prélevés dans une unique série expérimentale, montrant une résistance substantiellement semblable, on constate une dispersion des résultats, en dehors de l'erreur métrologique, de l'ordre de quelques %. Il en va de même lorsque l'on mesure l'énergie d'activation d'une série de dispositifs bolométriques après irradiation intense, et dont la résistance $R_{ac}$ a été modifiée, pourtant réputés identiques.

De plus, les inventeurs ont constaté que la mise en oeuvre des relations empiriques **(8)** et **(9)** uniques entre l'énergie d'activation $E_a$ et la résistance $R_{ac}$ pour produire la correction de gain au second ordre objet de l'invention, reste valable au moins sur l'étendue de variation de $R_{ac}$ liée à la dérive des bolomètres, constaté par le Demandeur comme étant dans les cas les plus extrêmes ordinairement encourus de l'ordre de 10% de la valeur de la résistance $R_{ac}$ des bolomètres lors de la mise en service de la caméra.

En combinant les relations **(5)**, **(7)** et **(9),** la relation **(7)** peut donc se réécrire selon les relations :

$$G_{shut}(i,j) = \frac{G_{ref}(i,j).\alpha(i,j).\beta(i,j)}{N}$$

$$\alpha(i,j) = \frac{R_{ac\_shut}(i,j)}{R_{ac\_ref}(i,j)} \qquad\qquad (10)$$

$$\beta(i,j) = \frac{1}{1 + \dfrac{K(T_{shut})}{Ea_{ref}(i,j)}.\ln\left(\dfrac{R_{ac\_shut}(i,j)}{R_{ac\_ref}(i,j)@T_{shut}}\right)} . \frac{T_{shut}^2}{T_{ref}^2}$$

avec :

$$R_{ac\_ref}(i,j)@T_{shut} = R_{ac\_ref}(i,j).\exp\left(\frac{q.Ea_{ref}(i,j)}{k}.\left(\frac{1}{T_{shut}} - \frac{1}{T_{ref}}\right)\right) \qquad (11)$$

Les rapports $\alpha(i,j)$ et $\beta(i,j)$ sont respectivement dénommés des facteurs de correction au premier ordre et au second ordre des dérives subies par les bolomètres.

De cette manière, il est obtenu une table de gains corrigée des variations de température du plan focal et de dérive globale et locale des bolomètres.

Ainsi donc, connaissant une table de gains et des valeurs de résistance et d'énergie d'activation initiales, il est possible à tout moment et à n'importe quelle température du détecteur de déterminer une nouvelle table de gains, et donc de tenir compte au second ordre des dérives des bolomètres, suite par exemple à une illumination trop intense.

**BREVE DESCRIPTION DES FIGURES**

L'invention sera mieux comprise à la lecture de la description qui va suivre, donnée uniquement à titre d'exemple, et dans lesquels des références identiques désignent des éléments identiques, et dans lesquels :

- la figure 1 est une image thermique d'une scène, obtenue au moyen d'un détecteur infrarouge bolométrique préalablement exposé délibérément en divers points au rayonnement solaire, dans des conditions où l'obturateur et la scène sont portés à des températures éloignées d'environ 30 °C, et corrigée selon une correction du premier ordre de l'état de la technique ;
- la figure 2 est une vue schématique d'ensemble d'un détecteur mettant en oeuvre le procédé selon l'invention ;
- la figure 3 est une vue schématique de la matrice de bolomètres et du circuit de lecture entrant dans la constitution du détecteur de la figure 2 ;
- la figure 4 est un organigramme d'un procédé selon un premier mode de réalisation de l'invention ;
- la figure 5 est un organigramme d'un procédé selon un second mode de réalisation de l'invention ; et

- la figure 6 est une image de la même scène de la figure 1, obtenue dans les mêmes conditions opératoires mais corrigée selon le procédé selon l'invention.

## DESCRIPTION DETAILLEE DE L'INVENTION

Il va à présent être décrit des modes de réalisation selon l'invention appliqués à un détecteur bolométrique particulier qui impose des signaux *S(i,j)* ou *NC(i,j)* particuliers en raison de la circuiterie électronique mise en oeuvre. Il est toutefois précisé que les paramètres et grandeurs particuliers qui sont dès lors employés en relation avec cette circuiterie, ne sont nullement limitatifs et représentent uniquement une application particulière de l'invention.

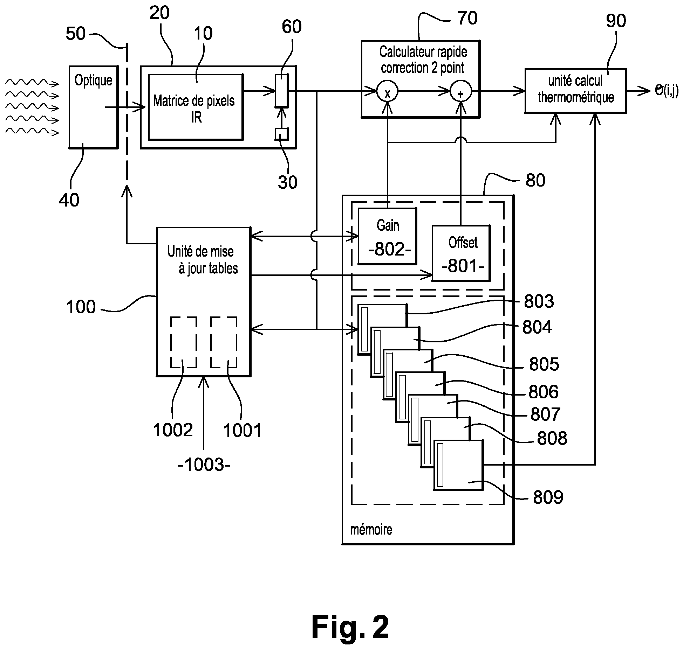

La figure 2 illustre de manière schématique un détecteur bolométrique selon l'invention. Ce détecteur est non régulé en température, la température de son plan focal étant donc libre d'évoluer, et détecte le rayonnement d'une scène à observer dans le domaine de l'infrarouge.

Le détecteur comporte une matrice **10** de détecteurs thermiques élémentaires, ou bolomètres, comportant chacun une membrane bolométrique suspendue au dessus d'un substrat par des bras de soutien, de polarisation et d'isolation thermique.

Un circuit de lecture **20** ainsi qu'au moins une sonde de température **30,** sont par ailleurs formés dans le substrat, et les membranes suspendues des bolomètres forment ensemble une rétine matricielle disposée dans le plan focal d'une optique **40.** Un obturateur pilotable **50** est par ailleurs prévu dans le trajet optique entre l'optique **40** et la matrice **10** de bolomètres. Le circuit de lecture **20** fournit un flux vidéo numérique représentatif de l'image thermique de la scène observée formée par l'optique **40,** et la sonde de température **30** fournit un signal numérisé représentatif de la température mesurée et associée au flux vidéo. La gestion des signaux de sortie du circuit **20** est par exemple réalisée par échantillonnage-blocage puis multiplexage à l'aide d'un circuit **60,** d'une manière connue en soi de l'état de la technique.

Les données en sortie du circuit de lecture **20** constituent des données « brutes », c'est-à-dire sans traitement analogique ou numérique visant à corriger les défauts des bolomètres. Un pixel d'une image du flux vidéo délivrée par le circuit **20** correspond donc à la valeur brute *S(i,j)* ou *NC(i,j)* (devant une scène uniforme) issue d'un bolomètre.

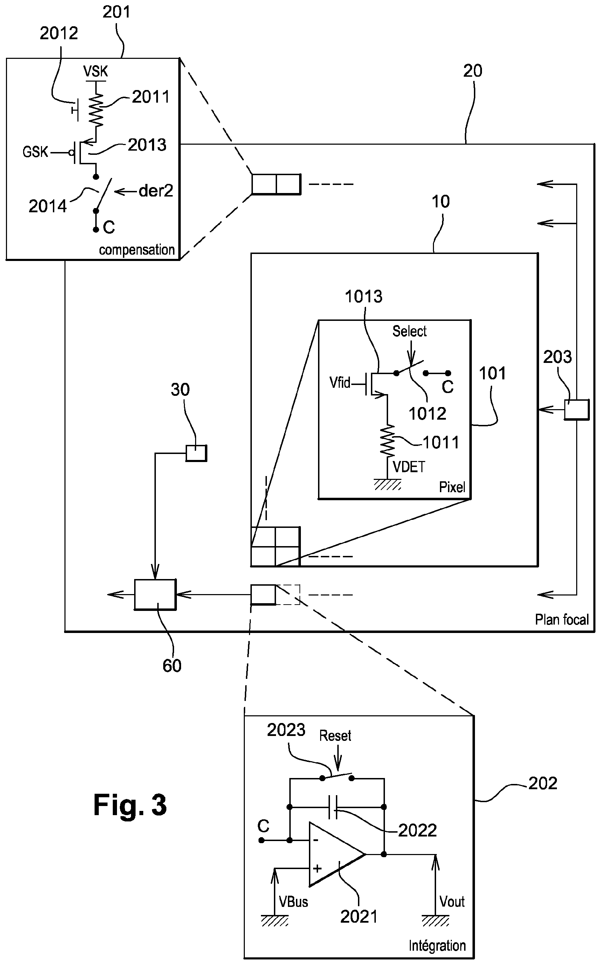

La figure 3 est une vue plus en détail de la matrice de bolomètres **10 et** du circuit de lecture **20.** Cet ensemble comprend :

- une matrice bidimensionnelle **10** comprenant $\underline{n}$ lignes et $\underline{m}$ colonnes de points élémentaires d'imagerie bolométrique **101,** ou « pixels », comprenant chacun un bolomètre résistif d'imagerie **1011,** où $\underline{n}$ et $\underline{m}$ sont des entiers supérieurs ou égaux à 1;
- une ligne de circuits **201** de compensation de mode commun, chacun associé à une colonne de la matrice **10** ;
- une ligne d'intégrateurs **202,** chacun associé à une colonne de la matrice **10** ; et
- un circuit de cadencement et d'adressage ligne par ligne **203** de la matrice **10.**

Comme cela est connu en soi, les bolomètres d'imagerie **1011** sont usuellement constitués d'une membrane suspendue par des bras de soutien au dessus du substrat dans lequel sont formés les divers éléments électroniques nécessaires à la lecture. Le matériau bolométrique des membranes est du silicium amorphe (a-Si) ou un alliage amorphe de silicium et de germanium (a-Si$_x$Ge$_{1-x}$).

Chaque circuit d'intégration **202** comprend :

- un amplificateur opérationnel **2021,** dont la borne non inverseuse (+) est mise à une tension constante *VBUS* prédéterminée ;
- un condensateur **2022** de capacité $C_{int}$ prédéterminée, connecté entre la borne inverseuse (-) de l'amplificateur **2021** et la sortie de celui-ci ; et
- un interrupteur de remise à zéro **2023** connecté en parallèle du condensateur **2022** et pilotable au moyen d'un signal « *Reset* » produit par le circuit de cadencement **203.**

Chaque point élémentaire **101** de la matrice **10** comporte par ailleurs un interrupteur **1012** de lecture, pilotable au moyen d'un signal « *Select* » et connecté à la borne inverseuse (-) de l'amplificateur opérationnel **2021** du circuit **202** associé, et un premier transistor NMOS **1013** d'injection, dont la grille est piloté par une tension *VFID* de manière à imposer une tension *Vac* aux bornes du bolomètre **1011,** dont la source est connectée à une borne du bolomètre **1011,** et dont le drain est connecté à l'autre borne de l'interrupteur **1012** de lecture. L'autre borne du bolomètre **1011** est connectée à un potentiel bas constant *VDET,* par exemple la masse du détecteur.

Chaque circuit de compensation **201** du courant de mode commun comprend un bolomètre résistif de compensation **2011** réalisé dans le même matériau que le bolomètre d'imagerie **1011,** de résistance électrique $R_{av}$, essentiellement insensible au rayonnement issu de la scène, par exemple en ce qu'il présente une faible résistance thermique vers le substrat, et est pourvu, de manière optionnelle ou alternative, d'un écran opaque **2012.** Le bolomètre de compensation **2011** est connecté à l'une de ses bornes à une tension prédéterminée *VSK* et à l'autre de ses bornes, à la source d'un second transistor PMOS d'injection **2013** du circuit **201** dont la grille est pilotée par une tension *GSK* de manière à imposer une tension $V_{av}$ aux bornes du bolomètre **2011.** Le circuit de compensation **201** comprend également de manière optionnelle un interrupteur de mesure de résistance **2014,** pilotable par le circuit de cadencement **203** au moyen d'un signal « *Der2* », et agencé entre le drain du transistor d'injection **2013** et l'entrée inverseuse (-) de l'amplificateur opérationnel **2021** du circuit d'intégration **202** associé. La fonction de cet interrupteur sera décrite plus en détail ci-dessous en fonction des modes de mise en oeuvre de l'invention.

Bien entendu, les polarités des pixels **101** et des circuits **201** peuvent être inversées moyennant inversion de type des transistors MOS.

Un circuit de compensation **201** et les pixels **101** de la colonne de la matrice **10** associée au circuit de compensation étant connectés à un point de sommation de courant **C** connecté à l'entrée inverseuse « - » d'un amplificateur opérationnel **2021,** le potentiel de ce point de sommation est maintenu à un potentiel de référence égal, à une tension d'offset près, au potentiel *VBUS.*

Typiquement, tous les bolomètres **1011** d'une même ligne de la matrice **10** sont polarisés et « lus » simultanément, et l'ensemble de la matrice **10** est balayé ligne après ligne au moyen d'un adressage séquentiel des lignes, un circuit de compensation **201** étant commun à chaque pixel **101** d'une même colonne.

Lors d'un cycle de lecture d'une ligne de la matrice d'imagerie **10** pour déterminer la température de la scène détectée par celle-ci, les interrupteurs de mesure de résistance **2014** des circuits de compensation **201** sont dans leur état fermé et l'interrupteur de remise à zéro **2023** de chaque circuit d'intégration **202,** qui est fermé au cours d'un cycle préliminaire de remise à zéro du condensateur **2022,** est basculé dans son état ouvert par le circuit de cadencement **203.** Ce dernier ferme alors l'interrupteur **1012** de sélection des pixels **101** de la ligne en cours de lecture. La différence entre le courant $i_{ac}$ traversant un bolomètre d'imagerie **1011** et le courant $i_{av}$ traversant le bolomètre de compensation **1012** associé est alors intégré par le condensateur **2022** du circuit **202** correspondant. Lorsqu'une durée d'intégration $T_{int}$ prédéterminée s'est écoulée depuis la fermeture des interrupteurs de lecture **1012,** le circuit de cadencement **203** ouvre alors ceux-ci. La tension $V_{out}$ en sortie d'un circuit d'intégration **202** est alors donnée par l'expression :

$$V_{out} = V_{bus} + \frac{1}{C_{int}} \int_0^{T_{int}} (i_{ac}(t) - i_{av}(t)) dt \qquad \textbf{(12)}$$

On peut écrire la relation **(12)** de manière équivalente, au premier ordre, c'est-à-dire en admettant que les courants $i_{ac}$ et $i_{av}$ sont constants sur la durée d'intégration $T_{int}$ :

$$V_{out} = \left( \frac{V_{ac}}{R_{ac}} - \frac{V_{av}}{R_{av}} \right) . \frac{T_{int}}{C_{int}} + V_{bus} \quad \textbf{(13)}$$

Comme le courant $i_{av}$ traversant le bolomètre de compensation **2011** est sensiblement égal au courant de mode commun traversant le bolomètre d'imagerie **1011,** la différence entre la résistance électrique du bolomètre d'imagerie **1011** et la résistance du bolomètre de compensation **2011** associé, qui induit la différence de courant en entrée du circuit d'intégration **202,** est alors essentiellement représentative de la variation $\Delta R_{ac}$ de la résistance électrique $R_{ac}$ du bolomètre d'imagerie **1011** induite par le rayonnement issu de la scène et incident sur celui-ci.

Les tensions $V_{out}$ de la ligne en cours de lecture sont envoyées au circuit **60** pour un échantillonnage - blocage et multiplexage. Le signal brut de sortie *NC* associé à un bolomètre d'imagerie **1011** est donc, dans l'exemple illustré ici, la valeur échantillonnée de la tension $V_{out}$. Par souci de clarté afin de ne pas alourdir les notations, les valeurs analogiques seront par la suite employées dans les relations algébriques, étant entendu qu'en réalité, il s'agit plutôt des valeurs digitales fournies par un convertisseur analogique-numérique (ADC pour les anglo-saxons) qui sont utilisées. Selon ce raccourci, on a donc $V_{out}$ = S ou $V_{out}$ = NC.

Le ou les signaux de température du substrat produits par la ou les sondes de température **30** sont également insérés dans le flux de données en sortie du multiplexeur **60** selon des techniques connues.

Une telle structure de détecteurs bolométriques est classique et ne sera pas expliquée plus en détail par la suite. Pour de plus amples informations, on pourra utilement se reporter par exemple au document « Uncooled amorphous silicon enhancement for 25μm pixel pitch achievement » de E. Mottin et al, Infrared Technology and Application XXVIII, SPIE, vol. 4820.

En se référant de nouveau à la figure 2, le détecteur selon l'invention comporte également un circuit de calcul rapide **70,** comme par exemple un DSP (pour « *digital signal procèssor* »), raccordé à la sortie du circuit de lecture **20.** Le circuit de calcul **70** applique à chaque image du flux en sortie du circuit de lecture **20** une correction « deux points » d'offset et de gain afin de corriger les dispersions d'offset et de gain des bolomètres **1011** de la matrice **10** à l'aide d'une table d'offsets **801** et d'une table de gains **802** d'une unité de mémoire **80** du détecteur.

Un circuit de calcul **90** reçoit le flux d'images corrigées et détermine alors une température $\theta_{scène}$ (ou toute grandeur d'intérêt en sortie en relation avec $\theta_{scène}$ si l'application n'est pas strictement thermographique) du rayonnement infrarouge IR incident sur chaque bolomètre d'imagerie **1011** en fonction des signaux corrigés en sortie du circuit de calcul **70,** de la responsivité *Resp* **809** du détecteur **10 par** rapport à la température de la scène, conservée dans une unité de mémoire **80,** ainsi que la table de gains **802.**

Une unité de calcul **100** est par ailleurs prévue pour la mise à jour des tables d'offsets **801** et de gains **802** et est raccordée à l'obturateur **50,** au circuit de lecture **20,** et à l'unité de mémoire **80.** Pour son fonctionnement, l'unité de calcul **100** comporte une horloge interne **1001** ainsi qu'une mémoire **1002** pour stocker ses calculs intermédiaires. L'unité **100** est également adaptée pour recevoir des ordres de mise à jour **1003** de la part de l'utilisateur du détecteur.

Bien évidemment, on comprendra que les unités **70, 80, 90, 100** puissent être mises en oeuvre dans un ou plusieurs microprocesseurs, l'accent ayant été mis dans l'exemple illustré sur les fonctions mises en oeuvre plutôt que sur le matériel qui pourrait être réellement utilisé.

## PREMIER MODE DE REALISATION

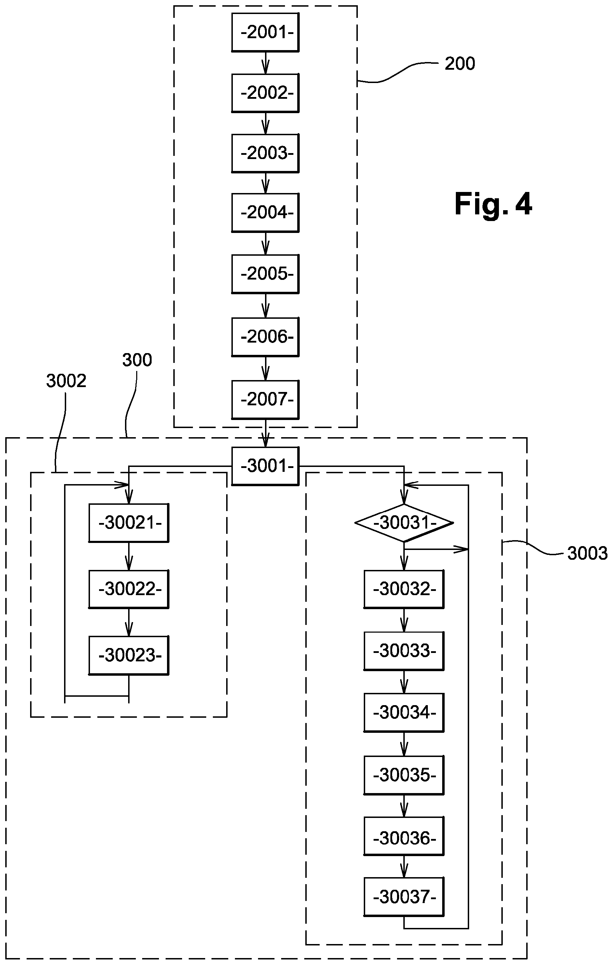

Il va à présent être décrit, en relation avec l'organigramme de la figure 4, un procédé selon un premier mode de réalisation mis en oeuvre par le détecteur venant d'être décrit.

Ce premier mode de réalisation s'applique plus généralement à tout type de détecteur mettant en oeuvre une estimation des valeurs des résistances des bolomètres d'imagerie **1011** ou de toutes grandeurs représentatives de celles-ci. Comme cela apparaîtra ci-dessous, la détermination d'une nouvelle table de gains est indépendante des paramètres particuliers du circuit de lecture.

Le procédé débute par une première phase **200** de calibration en usine visant à obtenir les données initiales permettant la mise en oeuvre ultérieure de la détermination d'une nouvelle table de gains selon la relation **(10).**

Plus particulièrement, la phase de calibration **200** débute par l'acquisition, en **2001,** de deux tables de signaux bruts des bolomètres **1011** de la rétine **10,** lorsque la caméra est disposée devant deux corps noirs portés aux températures uniformes *T1* et *T2,* désignées respectivement par $NC_{T1}(i,j)$ et $NC_{T2}(i,j)$. Les tables $NC_{T1}(i,j)$ et $NC_{T2}(i,j)$ sont formées préférentiellement, comme cela est connu en soi, de la valeur moyenne de plusieurs trames acquises successivement, typiquement au moins dix trames successives, afin de filtrer les dispersions liées au bruit d'acquisition ou inhérent au détecteur.

En **2002,** l'une des tables acquises, par exemple la table $NC_{T1}(i,j),$ est mémorisée en tant que table d'offsets initiale **801** dans la mémoire **80.** La moyenne algébrique $\overline{NC_{T1}}$ de la table $NC_{T1}(i,j),$ qui est également utilisée dans la correction « deux points », est également mémorisée dans l'espace mémoire **801.** La table $NC_{T1}(i,j)$ et sa moyenne $\overline{NC_{T1}}$ sont par ailleurs mémorisées dans un espace **803** de la mémoire 80 en tant que table de signaux bruts de référence $NC_{ref}(i,j)$ et moyenne de référence $\overline{NC_{ref}}$.

De même, toujours en **2002,** une table de gains initiale, ou « de référence » est calculée selon la relation

$$G_{ref}(i,j) = \frac{\overline{NC_{T2}} - \overline{NC_{T1}}}{NC_{T2}(i,j) - NC_{T1}(i,j)}$$ et mémorisée en tant que table de gains initiale dans l'espace **802** dans la mémoire **80.** La table $G_{ref}(i,j)$ est également mémorisée en tant que table de gains de référence dans un espace **804** de la mémoire **80.**

La température du substrat pendant cette opération de calibration est également mémorisée en tant que température de référence $T_{ref}$ dans un espace **805** de la mémoire **80.** Selon une forme plus élaborée d'estimation de cette grandeur au moyen de plusieurs sondes de température, une forme tabulée $T_{ref}(i,j)$ de la température de référence $T_{ref}$ est établie et mémorisée dans l'espace **805.**

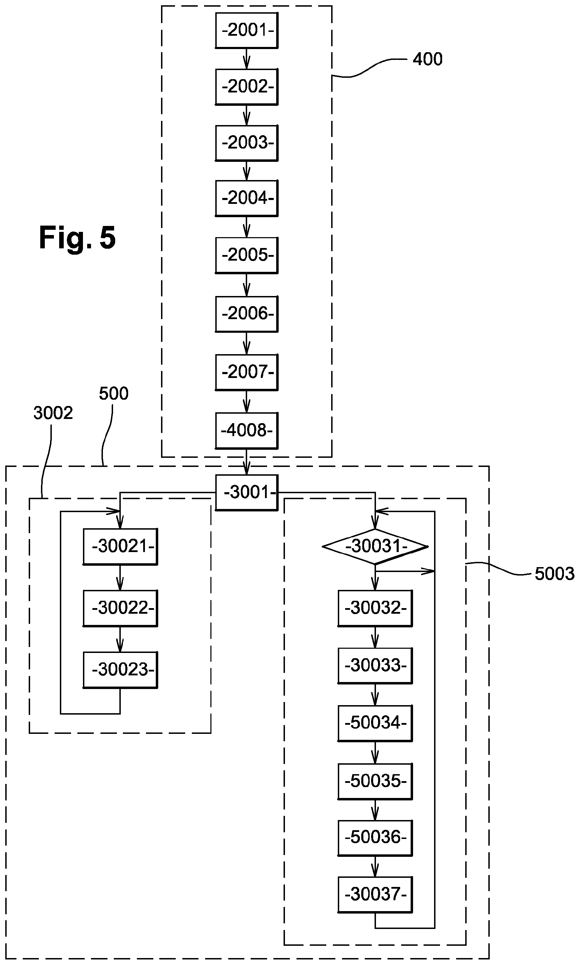

En **2003,** la valeur des résistances $R_{ac\_ref}(i,j)$ des bolomètres d'imagerie **1011** est calculée en fonction des paramètres du circuit de lecture **20** d'une manière connue en soi, par exemple au moyen d'une mise en oeuvre décrite dans le document FR 2 936 052 en relation avec le mode de réalisation de la figure 5 dudit document, en disposant la caméra devant le corps noir de température $T_1$, et une table de résistances correspondante est mémorisée dans un espace **806** dans la mémoire **80.** Notamment, les interrupteurs de mesure de résistance **2014** des circuits de compensation **201** sont basculés dans leur état ouvert par le circuit de cadencement **203,** et la matrice de bolomètres **10** est lue ligne par ligne. A la fin d'un cycle d'intégration, la tension $V_{out}$ associée à un bolomètre de coordonnées $(i, j)$ en sortie d'un l'intégrateur **202** est donnée par la relation :

$$V_{out} = V_{bus} + \frac{1}{C_{int}} \int_0^{T'_{int}} i_{ac}(i,j)(t)dt$$

où $T'_{int}$ est une durée d'intégration réduite sélectionnée pour ne pas saturer le condensateur **2022** lors de la mesure de la dérive d'un bolomètre d'imagerie **1011**, et $i_{ac}(i,j)(t)$ est le courant instantané circulant dans le bolomètre d'imagerie.

L'unité de calcul **100** détermine alors une résistance électrique $R_{ac\_ref}(i, j)$ du bolomètre d'imagerie **1011** en fonction de la tension $V_{out}$, par exemple en supposant que cette résistance est sensiblement constante pendant la durée

$$V_{out} = \frac{V_{ac}}{R_{ac\_ref}(i,j)} \cdot \frac{T'_{int}}{C_{int}} + V_{bus} \cdot$$

d'intégration, auquel cas Il est alors aisé d'exprimer $R_{ac\_ref}(i, j)$ à l'aide de cette relation linéaire et des paramètres connus de la circuiterie et des stimuli appliqués.

D'autres mises en oeuvre des mesures de $R_{ac\_ref}(i, j)$ sont applicables, même en l'absence de l'interrupteur **2014,** par exemple en appliquant successivement deux tensions *VFID* différentes, induisant deux polarisations $V_{ac}$ différentes, ou encore en imposant deux temps d'intégration $T_{int}$ différents. On obtient alors une relation au premier ordre linéaire entre les grandeurs $V_{out}$ obtenues et les résistances $R_{ac\_ref}(i, j)$, dont on extrait une mesure des résistances $R_{ac\_ref}(i, j)$, ou au moins une grandeur substantiellement proportionnelle, comme il sera décrit plus en détail ci-dessous.

En **2004,** selon une variante préférée, l'énergie d'activation moyenne $\overline{Ea_{ref}}$ des bolomètres **1010** de la rétine **10,** préalablement acquise de manière connue en soi de manière empirique et générique, est mémorisée dans un espace **807** de la mémoire **80**. Les énergies d'activation de référence $Ea_{ref}(i, j)$ des bolomètres **1011** sont toutes posées égales à l'énergie moyenne $\overline{Ea_{ref}}$.

Par exemple, dans le cas d'un matériau bolométrique constitué d'une variété particulière de silicium amorphe, $\overline{Ea_{ref}}$ = 0,170 eV.

Selon une autre variante, l'énergie d'activation $Ea_{ref}(i, j)$ de chaque bolomètre d'imagerie est acquise de manière connue en soi, par exemple en mesurant les résistances $R_{ac}$ à deux températures uniformes de plan focal, typiquement distantes de quelques degrés C, et une table d'énergie d'activation de référence est mémorisée dans l'espace **807** de la mémoire **80.** Dans le cas où plusieurs sondes de température sont disponibles, cette mesure préalable d'énergie d'activation est d'autant plus précise du fait que la différence de température imposée entre les deux mesures de $R_{ac}$ est mesurée ou modélisée en tout point de la rétine.

En **2006,** le coefficient *K* des relations **(8)** et **(9)** est mémorisé dans un espace **808** de la mémoire **80.** Par exemple, dans le cas d'une variété particulière de matériaux bolométriques constitués de silicium amorphe, *K* = 0,055 eV dans une large gamme de températures autour de 30 °C.

Le coefficient *K* est par exemple obtenu en extrayant, préalablement à la séquence d'opérations exposée ici, le coefficient directeur des points expérimentaux reliant l'énergie d'activation *Ea* au logarithme des résistances, mesurés sur un composant dont les pixels ont été localement modifiés par éclairement intense, et donc pour lesquels les matériaux sensibles constituant les résistances $R_{ac}(i, j)$ ont plus ou moins été modifiés.

L'extraction des valeurs du coefficient *K* peut, en complément éventuel, être étendue sur la plage complète de températures d'intérêt, de manière à obtenir la courbe comportementale *K(TPF)* en fonction de la température du plan focal. Cette relation comportementale empirique peut ensuite être exprimée sous forme analytique, par exemple polynomiale. Les divers coefficients nécessaires à la mise en oeuvre de l'invention sont dans ce cas également stockés dans l'espace **808.**

Les inventeurs ont cependant constaté que le paramètre *K(TPF)* n'est pas critique en termes de qualité de correction, à au moins +/- 20% près, même lorsque la température du détecteur varie dans de très larges proportions, et/ou que le bolomètre considéré dérive par exemple de +/- 10% en résistivité (à température constante), ce qui représente un cas vraiment extrême.

Il est entendu que les valeurs proposées pour les paramètres $\overline{Ea_{ref}}$ et *K(TPF)* ne sont qu'un exemple. Il convient d'attribuer à ces paramètres des valeurs pertinentes par rapport au matériau particulier mis en oeuvre comme thermomètre du bolomètre **1011.**

Enfin, en **2007,** la responsivité moyenne $\overline{Resp_{ref}}$ du détecteur à la température de référence $T_{ref}$, est mesurée devant deux corps noirs portés aux températures *T1* et *T2,* et mémorisée dans un espace **809** de la mémoire **80.** Plus particulièrement, la moyenne $\overline{Resp_{ref}}$ est calculée selon la relation :

$$\overline{\mathrm{Re}\,sp_{ref}} = \frac{\overline{NC_{T2}} - \overline{NC_{T1}}}{T2 - T1} \qquad (14)$$

Comme précisé précédemment, la responsivité est étalonnée sur l'ensemble de la gamme de températures opérationnelles de la caméra, de sorte qu'on établit et mémorise quelques points de la courbe $\overline{Resp_{ref}} = f(T)$, $T_{ref}$ n'étant qu'un point particulier auquel a été acquise en **2003** la table des résistances $R_{ac\_ref}$. Comme indiqué également, cette étape peut être omise s'il on préfère utiliser le scalaire correctif $N$ de normalisation des tables de gains résultant de la mise en oeuvre de l'invention, au moins dans le cas de bolomètres à base de silicium amorphe ou d'alliages silicium-germanium.

Le procédé se poursuit alors par une deuxième phase **300** mise en oeuvre alors que le détecteur est en service. La deuxième phase **300** comprend une étape **3001** de mise en marche du détecteur qui ouvre l'obturateur **50** et déclenche un processus **3002** d'acquisition d'un flux vidéo de la scène observée.

Le processus **3002** comporte l'acquisition, en **30021**, d'une table de signaux bruts $S(i,j)$ par le circuit de lecture **20**, suivi, en **30022**, d'une correction « deux points » de la table $S(i,j)$ par le circuit de calcul **70** selon la relation :

$$S_{corr}(i,j) = G_{802}(i,j).\big(S(i,j) - NC_{801}(i,j)\big) + \overline{NC_{801}} \quad (15)$$

où $G_{802}(i,j)$, $NC_{801}(i,j)$ et $\overline{NC_{801}}$ sont respectivement la table de gains mémorisée dans l'espace **802** de la mémoire **80**, et la table d'offsets et sa moyenne mémorisées dans l'espace **801** de la mémoire **80**.

Le processus **3002** se poursuit par le calcul, en **30023**, d'une image thermométrique (ou plus généralement « d'intérêt ») $\theta(i,j)$ par le circuit de calcul **90** à partir de la table de signaux corrigés $S_{corr}(i,j)$ délivrée par le circuit de calcul **70** selon une relation du type $\theta_{scene}(i,j) = f(S_{corr}(i,j), \overline{Resp_{ref}})$.

Enfin, l'étape **30023** reboucle sur l'étape **30021** pour l'acquisition et le traitement d'une nouvelle table de signaux bruts.

Parallèlement au processus **3002** d'acquisition du flux vidéo, l'étape **3001** de mise en marche déclenche un processus **3003** de mise à jour de la table d'offsets **801**, de la table de gains **802** et de la responsivité moyenne **809** mise en oeuvre par l'unité de calcul **100**.

Le processus **3003** de mise à jour comporte une première étape **30031** de test de l'occurrence d'une condition de mise à jour de ces données. Par exemple, l'unité de calcul **100** teste si un ordre a été émis par l'utilisateur pour procéder à une telle mise à jour, et/ou si la durée écoulée depuis la dernière mise à jour est supérieure à une durée de seuil prédéterminée, et/ou si la température du substrat délivrée par le capteur de température **30** est différente de la température du substrat lors de la dernière mise à jour de plus d'une valeur de seuil prédéterminé. L'unité de calcul peut également mettre en oeuvre un algorithme de traitement pour déterminer si la rétine **10** a subi une illumination intense signifiant une modification des caractéristiques intrinsèques des bolomètres ainsi surexposés, et donc une possible dérive de ceux-ci.

Si la température du substrat est tabulée pour chaque bolomètre, selon une forme plus élaborée d'estimation de cette grandeur au moyen du signal fourni par plusieurs sondes, l'occurrence d'une condition de mise à jour relative à la température peut prendre en compte plusieurs de ces signaux, ou combinaisons de ces signaux entre eux ou avec d'autres paramètres réputés utiles ou pertinents dans ce contexte d'intérêt de prise en compte des variations globales ou locales de température du plan focal.

Si l'une des conditions de mise à jour est satisfaite, le processus **3003** se poursuit par la fermeture, en **30032**, de l'obturateur **50**. Si la caméra ne comporte pas d'obturateur, le système (et/ou l'utilisateur) n'engagera l'étape **30032** qu'après satisfaction d'une condition d'uniformité de scène suffisante, ou activera tout système destiné à uniformiser autant que possible l'image perçue sur la rétine.

En **30033**, une table de signaux bruts $NC_{shut}(i,j)$ est alors mémorisée dans la mémoire **1002** de l'unité **100**, cette table étant de préférence formée de la moyenne de plusieurs trames successives, par exemple dix. La température du substrat $T_{shut}$ délivrée par le capteur **30** à l'instant d'acquisition de la table $NC_{shut}(i,j)$ et la moyenne algébrique $\overline{NC_{shut}}$ de la table $NC_{shut}(i,j)$ sont également mémorisées dans la mémoire **1002** de l'unité **100**.

Le processus se poursuit, en **30034**, par le calcul par l'unité **100** des valeurs de résistance $R_{ac\_shut}(i,j)$ selon une méthode par exemple proposée dans le document FR 2 936 052 en fonction des paramètres du circuit de lecture **20**, d'une manière analogue à celle décrite en relation avec l'étape **2003** en fermant l'obturateur **50**.

De même, toujours en **30034**, les valeurs de résistance $R_{ac\_ref}(i,j)@T_{shut}$ sont estimées en fonction des valeurs de résistance $R_{ac\_ref}(i,j)$, de la ou des énergies d'activation $Ea_{ref}$ et de la température $T_{ref}$ mémorisée dans la mémoire **80**, ainsi que de la température $T_{shut}$ mémorisée dans l'unité **100**. Cette estimation est par exemple mise en oeuvre en utilisant la relation **(11)** directement sous cette forme, ou à tout le moins une forme numérique ou linéarisée de celle-ci. Il est entendu que $T_{ref}$ et $T_{shut}$ peuvent aussi être tabulées.

Les valeurs de résistance $R_{ac\_ref}(i, j)@T_{shut}$ et $R_{ac\_shut}(i, j)$ sont mémorisées dans des tables correspondantes dans la mémoire **1002** de l'unité **100**.

$$\alpha(i, j) = \frac{R_{ac\_shut}(i, j)}{R_{ac\_ref}(i, j)}$$

Ensuite, en **30035**, les facteurs de correction au premier ordre $\alpha(i, j)$ sont calculés et mémorisés par l'unité **100**.

De même, les facteurs de correction au second ordre $\beta(i, j)$ sont calculés et mémorisés par l'unité **100**, par exemple en utilisant la relation $\beta(i, j)$ de la relation **(10)** directement sous cette forme, ou de manière avantageuse, notamment pour une plus grande rapidité de calcul, en mettant en oeuvre une forme linéarisée au premier ordre de cette relation selon l'expression :

$$\beta(i, j) = \frac{1}{\left(1 + \frac{K}{E_{a\_ref}} \cdot \left(\frac{R_{ac\_shut}(i, j) - R_{ac\_ref}(i, j)@T_{shut}}{R_{ac\_ref}(i, j)@T_{shut}}\right)\right)} \cdot \frac{T_{shut}^2}{T_{ref}^2} \quad (16)$$

En **30036**, une nouvelle table de gains est alors calculée par l'unité **100**.

La nouvelle table de gains est alors calculée selon la relation :

$$G_{shut}(i, j) = \frac{G_{ref}(i, j).\alpha(i, j).\beta(i, j)}{N} \quad (17)$$

où le scalaire de normalisation $N$ est la valeur moyenne de tous les éléments du numérateur, qui peut avantageusement être mémorisé dans l'objet de correction de la responsivité moyenne, comme il a été précédemment indiqué.

Toujours en **30036**, optionnellement, l'unité **100** calcule une nouvelle responsivité moyenne $\overline{Resp_{shut}}$ selon la relation $\overline{Resp_{shut}} = \overline{Resp_{ref}}.N$.

Enfin, la mise à jour **3003** se termine, en **30037**, par la mise à jour des données de la mémoire **80**, à savoir :

- le remplacement des valeurs courantes de la table d'offsets $NC_{801}(i, j)$ et de sa moyenne mémorisée $\overline{NC_{801}}$ dans l'espace mémoire **801** respectivement par la table de valeurs brutes $NC_{shut}(i, j)$ et la moyenne algébrique $\overline{NC_{shut}}$ de celle-ci ;
- optionnellement, le remplacement de la valeur de la responsivité moyenne mémorisée dans l'espace mémoire **809** par la responsivité moyenne nouvellement calculée $\overline{Resp_{shut}}$ ;
- la mémorisation de données utilisées pour le test **30031** de déclenchement de la mise à jour, notamment la température $T_{shut}$ et des données d'horodatage $H_{shut}$ de l'instant de la mise à jour, par exemple dans la mémoire **80** ;
- l'ouverture de l'obturateur **50 ;** et
- le rebouclage sur l'étape de test **30031** pour la scrutation de l'occurrence des conditions de déclenchement de la mise à jour.

Il s'entend que s'il est mis en oeuvre une pluralité de sondes de température en divers points du substrat, une forme tabulée des paramètres $T_{ref}$ et $T_{shut}$ sera typiquement utilisée partout où ces paramètres apparaissent, comme il a été indiqué.

Comme dit précédemment, le premier mode de réalisation de l'invention s'applique à des détecteurs qui permettent de déterminer la valeur des résistances des bolomètres. Cette détermination peut consister en un calcul réalisé en fonction des signaux bruts délivrés en sortie du circuit de lecture ou par tout autre moyen. Notamment, il est décrit un détecteur comportant des interrupteurs **2014** dans les circuits de compensation **201** permettant la mesure de tensions $V_{out}$ associées uniquement aux bolomètres d'imagerie **1011**. D'autres architectures de mesure de résistances sont possibles. En variante, plutôt que de réduire la durée d'intégration, la valeur de la capacité $C_{int}$ des condensateurs **2022** est augmentée de manière à ce que ceux-ci ne saturent pas lors d'une intégration de durée $T_{int}$ utilisée lors du fonctionnement normal du détecteur. Par exemple, chaque intégrateur **202** comporte deux condensateurs, un premier étant sélectionné par le circuit de cadencement **203** lors de la lecture de la matrice d'imagerie **10,** et le second étant sélectionné lors de la mesure de la résistance des bolomètres d'imagerie **1011.**

En variante, l'architecture décrite dans le document FR 2 936 052 en relation avec les figures 1 et 2, mesurant la différence entre la résistance des bolomètres d'imagerie et des résistances de référence connues, est utilisée pour mesurer les résistances des bolomètres d'imagerie **1011.**

Il convient cependant de préciser qu'il n'y a pas besoin d'estimer les résistances $R_{ac\_shut}(i, j)$ proprement dites pour mettre en oeuvre le premier mode de réalisation. En effet, les tables de gains $G_{shut}(i, j)$ sont invariantes lorsque l'échelle des rapports de « $R_{ac}$ » introduits dans les relations précédentes est spatialement uniforme. L'usage de n'importe quel protocole de « mesure » des résistances produit le résultat attendu, pourvu que la proportionnalité du résultat de ce protocole par rapport aux résistances $R_{ac}$ soit au moins approximative, et que ledit protocole soit spatialement reproductible pour tous les bolomètres de la rétine.

Ces conditions sont satisfaites par exemple selon les enseignements du document FR 2 936 052 au moyen d'une circuiterie particulière comportant par exemple un interrupteur **2014** d'ouverture de la branche de compensation et/ou des résistances de référence, ou encore au moyen d'un protocole particulier tel que l'usage de deux tensions de polarisation ou deux temps d'intégration différents comme indiqué précédemment.

Le détecteur décrit notamment en relation avec la figure 3 reste cependant une application particulière, bien que privilégiée, du premier mode de réalisation.

On comprendra que le premier mode de réalisation s'applique également à des détecteurs ayant des circuiteries de polarisation différentes, par exemple des circuits de polarisation en courant ou encore des circuits de compensation de mode commun différents. Le premier mode de réalisation s'applique bien entendu également à des détecteurs régulés en température, auquel cas la mesure de la température du substrat est optionnelle, la température $T_{shut}$ étant identique à la température $T_{ref}$ objet de la régulation de température. Les relations précédentes sont alors simplifiées en conséquence, et notamment ne comprennent pas de rapport de température et ne nécessitent pas d'estimer les valeurs $R_{ac\_ref}(i, j)@T_{shut}$ qui sont par définition égales aux valeurs $R_{ac\_ref}(i, j)$.

## DEUXIEME MODE DE REALISATION

L'invention s'applique également aux détecteurs qui ne comprennent pas de moyens logiciels et/ou matériels de détermination des valeurs des résistances des bolomètres, ce qui permet d'appliquer l'invention à des détecteurs de l'état de la technique sans modification du détecteur lui-même ni des matériels et logiciels de proximité par exemple de pilotage et formatage des signaux bruts.

Le second mode de réalisation de l'invention est à présent décrit en relation avec l'organigramme de la figure 5, et également en application d'un détecteur identique à celui des figures 2 et 3 à la différence qu'il ne comporte typiquement pas d'interrupteurs de mesure de résistance **2014,** ou de manière générale qui ne comporte pas de moyen matériel et/ou logiciel permettant d'obtenir en service une estimation des valeurs individuelles des résistances des bolomètres **1011.**

Le problème du second mode de réalisation, par rapport au premier mode exposé précédemment, est posé par l'absence en service de mesure directe, par exemple substantiellement proportionnelle, ou indirecte, par exemple substantiellement linéaire, de résistance. En effet, cette mesure permet de quantifier directement, pour chaque bolomètre d'imagerie **1011,** la quantité de variation de résistance attribuable à une véritable dérive, c'est-à-dire à laquelle est associée une variation de *Ea.* Dans le premier mode de réalisation décrit précédemment, la conséquence d'une variation de température de la caméra, qui n'implique aucune variation significative de l'énergie d'activation, est ainsi différenciée d'une variation de résistivité intrinsèque d'un bolomètre **1011** particulier, à laquelle correspond une variation calculable d'énergie d'activation grâce aux relations **(8)** ou **(9).**

Il est maintenant nécessaire, en l'absence de grandeur directement utilisable pour estimer chaque résistance, de former pour chaque bolomètre **1011** de la rétine **10** une grandeur sur laquelle appliquer de manière pertinente une correction au second ordre.

Tout d'abord, on note que la valeur du terme $\Delta NC(i, j) = NC_{shut}(i, j) - NC_{ref}(i, j)$, entre un instant courant de température de substrat $T_{shut}$ et un instant antérieur de température de substrat $T_{ref}$, dépend pour une partie de la dérive des bolomètres **1011** et comporte donc des informations concernant celle-ci. Le second mode de réalisation se propose donc d'extraire du terme $\Delta NC(i, j)$ l'essentiel de la composante liée à la dérive intrinsèque, c'est-à-dire hors variation de température, des bolomètres **1011.**

En se référant à la relation **(13),** le terme $\Delta NC(i, j)$ se formule au premier ordre selon la relation :

$$\Delta NC(i, j) = \frac{T_{\text{int}}}{C_{\text{int}}} \cdot \left( \left( \frac{1}{R_{ac\_shut}(i, j)} - \frac{1}{R_{ac\_ref}(i, j)} \right) . V_{ac} - \left( \frac{1}{R_{av\_shut}(j)} - \frac{1}{R_{av\_ref}(j)} \right) . V_{av} \right)$$

**(18)**

où $R_{av\_shut}(j)$ et $R_{av\_ref}(j)$ sont respectivement les valeurs des résistances du bolomètre de compensation **2011** associé à la j$^{ième}$ colonne de la rétine **10** à l'instant d'acquisition des nouveaux signaux de lecture $NC_{shut}(i,j)$, et à l'instant antérieur d'acquisition des signaux de lecture $NC_{ref}(i,j)$.

Les écarts $\left(\dfrac{1}{R_{av\_shut}(j)} - \dfrac{1}{R_{av\_ref}(j)}\right)$ liés aux bolomètres de compensation **2011,** qui sont aveugles et/ou ont une résistance thermique vers le substrat très faible, pour deux températures du substrat $T_{shut}$ et $T_{ref}$ différentes peuvent être considérés comme uniformes et peuvent être considérés égaux au premier ordre à une même valeur $\Delta_{av}$. En effet, d'une part les bolomètres de compensation **2011** ne subissent sensiblement aucune dérive, et conservent donc sensiblement leur état intrinsèque initial, et d'autre part, comme dit précédemment, les inventeurs ont constaté que la dispersion d'énergie d'activation est négligeable entre des bolomètres dans le même état, au moins pour les matériaux de type silicium amorphe ou alliages amorphes de silicium et germanium.

La mise en oeuvre de plusieurs sondes de température donne l'information nécessaire si besoin pour corriger chaque écart associé aux membres $\left(\dfrac{1}{R_{av\_shut}(j)} - \dfrac{1}{R_{av\_ref}(j)}\right)$ commun à chaque colonne, de la grandeur associée à la variation de température au voisinage de chaque bolomètre de compensation. Par simplicité, la dérivation plus complexe de ce cas n'est pas développée mais peut être entreprise.

La relation **(22)** se simplifie donc en la relation :

$$\Delta NC(i,j) = \frac{T_{int}}{C_{int}} \cdot \left(\left(\frac{1}{R_{ac\_shut}(i,j)} - \frac{1}{R_{ac\_ref}(i,j)}\right) V_{ac}\right) - \Delta_{av} \quad \textbf{(19)}$$

Ensuite, pour isoler la portion du terme $\Delta NC(i,j)$ liée à la dérive des bolomètres, le second mode de réalisation repose sur la comparaison de ce terme avec la moyenne $\overline{\Delta NC^{ND}}$ associée à des bolomètres d'imagerie **1011** n'ayant pas subi de dérive à l'instant d'acquisition de $NC_{shut}(i,j)$ et à la température $T_{shut}$, à savoir former les différences selon la relation :

$$\Delta NC(i,j) - \overline{\Delta NC^{ND}} \quad \textbf{(20)}$$

Selon une première variante, on observe qu'en général, seule une petite fraction des bolomètres d'imagerie **1011** est concernée par le phénomène de dérive à corriger. C'est typiquement le cas des rétines de grand format après observation du soleil sur une durée limitée (par exemple quelques minutes), car au pire, quelques % du nombre total des bolomètres **1011** sont touchés par la dérive. Dans ce cas, on constate que $\overline{\Delta NC^{ND}} \approx \overline{\Delta NC}$ et il est alors posé dans la relation **(20)** $\overline{\Delta NC^{ND}} = \overline{\Delta NC}$.

Selon une seconde variante qui estime de manière plus précise $\overline{\Delta NC^{ND}}$, et qui est par exemple utile lorsque le détecteur est soumis à des irradiations répétées, ou à un champ optique élevé, qui balayent ou concernent une surface relative non négligeable de la rétine, une identification des bolomètres ayant dérivé, et donc des bolomètres n'ayant pas dérivé, est mise en oeuvre.

Par exemple, une sélection spatiale gérée par logiciel des bolomètres d'imagerie **1011** associés aux éléments de la table de gains ayant subi une modification importante lors de la (ou des) dernière(s) mises à jour de cette table est mise en oeuvre. Les bolomètres **1011** qui ont véritablement dérivé sont ainsi identifiés pour la mise à jour en cours. La valeur $\overline{\Delta NC^{ND}}$ est alors calculée en moyennant les signaux bruts des bolomètres n'ayant pas dérivé. Une estimation très précise de la grandeur $\overline{\Delta NC^{ND}}$ est ainsi obtenue, et donc des corrections au second ordre à appliquer. En d'autres termes, il est proposé ici d'appliquer un masque spatial sélectif.

Par ailleurs, la grandeur $\overline{\Delta NC^{ND}}$ peut analytiquement se formuler selon la relation :

$$\overline{\Delta NC^{ND}} = \frac{T_{int}}{C_{int}} \cdot \left(\overline{\left(\frac{1}{R_{ac\_shut}^{ND}(i,j)} - \frac{1}{R_{ac\_ref}^{ND}(i,j)}\right) V_{ac}}\right) - \Delta_{av} \quad \textbf{(21)}$$

où $R_{ac\_ref}^{ND}(i,j)$ et $R_{ac\_shut}^{ND}(i,j)$ sont respectivement les valeurs des résistances $R_{ac\_ref}(i,j)$ et $R_{ac\_shut}(i,j)$ à l'instant de l'acquisition des signaux de lecture $NC_{shut}(i,j)$, et à l'instant antérieur d'acquisition des signaux de lecture $NC_{ref}(i,j)$ des bolomètres réputés n'ayant pas subi de dérive parmi l'ensemble des bolomètres de la rétine, c'est-à-dire dans le cas général comme indiqué, l'essentiel de la population des bolomètres.

En combinant les relations **(20)** et **(21),** il est alors obtenu au premier ordre :

$$\Delta NC(i,j) - \overline{\Delta NC^{ND}} = \frac{T_{int}.V_{ac}}{C_{int}} \cdot \left( \left( \frac{1}{R_{ac\_shut}(i,j)} - \frac{1}{\overline{R_{ac\_shut}^{ND}}} \right) - \left( \frac{1}{R_{ac\_ref}(i,j)} - \frac{1}{\overline{R_{ac\_ref}^{ND}}} \right) \right) \quad \textbf{(22)}$$

Or, selon le cas général, la dispersion des résistances $R_{ac\_ref}(i,j)$ est modérée, notamment parce que ces valeurs correspondent aux résistances des bolomètres en sortie d'usine alors qu'ils n'ont pas subi de dérive. Ainsi donc, le terme $\left( \frac{1}{R_{ac\_ref}(i,j)} - \frac{1}{\overline{R_{ac\_ref}^{ND}}} \right)$ peut être négligé.

Une réorganisation de l'équation **(22)** sans ce second terme conduit alors à la relation suivante :

$$\frac{\overline{R_{ac\_shut}^{ND}}}{R_{ac\_shut}(i,j)} = \frac{C_{int}.\overline{R_{ac\_shut}^{ND}}}{T_{int}.V_{ac}} \cdot \left( \Delta NC(i,j) - \overline{\Delta NC^{ND}} \right) + 1 \quad \textbf{(23)}$$

$\overline{R_{ac\_shut}^{ND}}$ étant estimé sur les bolomètres n'ayant pas subi de dérive de leur résistance, on a:

$$\overline{R_{ac\_shut}^{ND}} = \overline{R_{ac\_ref}} @ T_{shut} = \overline{R_{ac\_ref}}.\exp\left( \frac{q.Ea_{ref}}{k} \cdot \left( \frac{1}{T_{shut}} - \frac{1}{T_{ref}} \right) \right) \quad \textbf{(24)}$$

Le rapport de la relation **(23)** représente une variation relative entre les résistances des bolomètres **1011** non touchés par une dérive (représentés par le terme moyen au numérateur) et les résistances des bolomètres qui ont dérivé (représentés par la table du dénominateur).

Le facteur $\alpha(i,j)$ peut alors s'exprimer ainsi en exploitant la relation **(24)** :

$$\alpha(i,j) = \frac{R_{ac\_shut}(i,j)}{R_{ac\_ref}(i,j)} \approx \frac{R_{ac\_shut}(i,j)}{\overline{R_{ac\_ref}}} = \frac{R_{ac\_shut}(i,j)}{\overline{R_{ac\_shut}^{ND}}} \cdot \exp\left( \frac{q.Ea_{ref}}{k} \left( \frac{1}{T_{shut}} - \frac{1}{T_{ref}} \right) \right)$$

En reprenant la relation **(23)** dans la relation précédente, on obtient :

$$\alpha(i,j) = \left( \frac{T_{int}.V_{ac}}{C_{int}.\overline{R_{ac\_ref}}.@T_{shut}.\left( \left( \Delta NC(i,j) - \overline{\Delta NC^{ND}} \right) + 1 \right)} \right).\exp\left( \frac{q.Ea_{ref}}{k} \left( \frac{1}{T_{shut}} - \frac{1}{T_{ref}} \right) \right) \textbf{(25)}$$

Le facteur $\beta(i,j)$ est obtenu en combinant les relations **(10), (23)** et **(24)** selon l'expression :

$$\beta(i,j) = \cfrac{1}{1 - \cfrac{K}{Ea_{ref}}.\ln\left(1 + \cfrac{C_{int}.\overline{R_{ac\_ref}}.@\,T_{shut}}{T_{int}.V_{ac}}.\left(\Delta NC(i,j) - \overline{\Delta NC^{ND}}\right)\right)} . \cfrac{T_{shut}^2}{T_{ref}^2} \qquad (26)$$

Comme par ailleurs les inventeurs ont constaté que dans le cas général le second terme de l'argument logarithmique du dénominateur est très inférieur à 1, la relation (26) peut se réécrire au premier ordre selon la relation :

$$\beta(i,j) = \cfrac{1}{1 - \cfrac{K}{Ea_{ref}} . \cfrac{C_{int}.\overline{R_{ac\_ref}}.@\,T_{shut}}{T_{int}.V_{ac}} . \left(\Delta NC(i,j) - \overline{\Delta NC^{ND}}\right)} . \cfrac{T_{shut}^2}{T_{ref}^2} \qquad (27)$$

Ainsi donc, les relations (10) se réécrivent selon les relations :

$$G_{shut}(i,j) = G_{ref}(i,j).\alpha(i,j).\beta(i,j)/N$$

$$\frac{1}{\alpha(i,j)} = \left(1 + \frac{C_{int}.\overline{R_{ac\_ref}}\,@\,T_{shut}}{T_{int}.V_{ac}}.D(i,j)\right).\exp\left(\frac{-q.Ea_{ref}}{k}\left(\frac{1}{T_{shut}} - \frac{1}{T_{ref}}\right)\right)$$

$$\qquad (28)$$

$$\frac{1}{\beta(i,j)} = \left(1 - \frac{K}{Ea_{ref}}.\frac{C_{int}.\overline{R_{ac\_ref}}\,@\,T_{shut}}{T_{int}.V_{ac}}\right)\frac{T_{ref}^2}{T_{shut}^2}.D(i,j)$$

$$D(i,j) = \Delta NC(i,j) - \overline{\Delta NC^{ND}}$$

où $N = \overline{G_{ref}(i,j).\alpha(i,j).\beta(i,j)}$ est la moyenne de tous les termes du numérateur de l'expression de la table de gains $G_{shut}$.

Une bonne approximation de la table de gains normalisée simplifiant les calculs mis en oeuvre est obtenue selon l'expression suivante :

$$G_{shut}(i,j) = G_{ref}(i,j).\frac{\alpha(i,j)}{\overline{\alpha}}.\frac{\beta(i,j)}{\overline{\beta}} \qquad (29)$$

Le facteur de correction de responsivité moyenne, utile pour maintenir avantageusement la calibration thermographique à partir d'une seule acquisition en usine, est dans ce cas très bien approximé par $N = \overline{\alpha.\beta}$. En outre, s'il n'est pas appliqué de processus de discrimination des éléments réputés avoir ou non dérivé, le terme $\overline{\Delta NC^{ND}}$ qui apparaît dans les termes opératoires $D(i,j)$ est en général correctement approximé par la moyenne $\overline{\Delta NC}$.

Les relations (28) et (29) reprennent donc toujours la table initiale de gains, qui est corrigée au niveau dispersif par l'évolution « au premier ordre » des résistances (termes $\alpha$) et « au second ordre » selon l'invention par l'évolution du *TCR* (termes $\beta$). Enfin, tout comme selon le premier mode de réalisation, l'évolution de responsivité moyenne est accessible via le facteur de normalisation $N$ disponible à l'issue de la séquence de calcul de la table de gains corrigée. Il est enfin entendu que dans les expressions précédentes, le paramètre $K$ peut être exprimé en fonction de $T_{shut}$ si besoin, et les températures $T_{ref}$ et $T_{shut}$ tabulées si estimé utile pour la précision des corrections.

La calibration thermographique peut cependant être obtenue comme habituellement avec une série initiale d'acquisitions en usine de la responsivité moyenne à diverses températures. Dans ce cas il n'est pas besoin de former ni de conserver en mémoire le facteur de normalisation $N$ ni ses composantes.

On notera à la lecture de la relation (28) ou (29), qu'il convient selon ce second mode de réalisation de disposer de l'estimation de la valeur moyenne des résistances $\overline{R_{ac\_ref}}$ à une température $T_{ref}$ connue. Par ailleurs, les dérives globales à long terme intrinsèques aux matériaux de la rétine ne sont pas corrigées selon ce second mode. Toutefois, ces dérives naturelles à long terme sont habituellement négligeables devant les dérives spatialement limitées liées aux sur-éclairements intenses, et sans incidence sur la qualité d'image, ni au premier ordre sur les signaux $NC$ du fait de l'architecture compensée décrite sur la figure 3, puisque les bolomètres actifs et de compensation dérivent essentiellement de la même quantité relative et de manière uniforme. De fait, la mise en oeuvre de l'invention selon ce second mode demeure ainsi fort avantageuse.

Il va à présent être décrit plus en détail un exemple de réalisation du second mode de réalisation en relation avec la figure 5.

Le second mode de réalisation débute par une phase de calibration en usine **400** comportant les étapes **2001** à **2007** précédemment décrites. On notera concernant les valeurs de résistance $R_{ac\_ref}(i, j)$ des bolomètres d'imagerie **1011** qu'on dispose en usine des moyens nécessaires pour obtenir à l'étape **2003** une estimation de leur valeur moyenne $\overline{R_{ac\_ref}}$ mémorisée dans l'espace **806** à la température $T_{ref}$ mémorisée dans l'espace **805** à l'étape **2002,** et s'assurer que leur dispersion est suffisamment limitée pour autoriser l'application satisfaisante des corrections précédemment établies. Ces conditions sont satisfaites lors des phases de calibration de l'état de la technique à base de corps noir. En revanche, on notera que lors du fonctionnement en service du détecteur, on ne dispose pas de mesure ou d'estimation de la valeur des résistances des bolomètres d'imagerie **1011.**

La phase de calibration comporte en outre une étape **4008** de mémorisation des paramètres du circuit de lecture **20,** par exemple dans un espace mémoire supplémentaire de la mémoire **80,** à savoir la valeur $T_{int}$ de la durée d'intégration, la valeur $C_{int}$ de la capacité d'intégration **2022,** et la valeur $V_{ac}$ de la tension de polarisation des bolomètres d'imagerie **1011.**

Le procédé se poursuit alors par une deuxième phase **500** mise en oeuvre alors que le détecteur est en service. Cette deuxième phase comporte l'étape **3001** et le processus **3002** décrits précédemment, ainsi qu'un processus de mise à jour **5003** des tables de gains **803** et d'offsets **801** et de la responsivité moyenne **809.**

Le processus de mise à jour **5003** comporte les étapes de test **30031,** de fermeture de l'obturateur **30032** et d'acquisition de la table de signaux bruts **30033,** décrites précédemment.

Le processus de mise à jour **5003** se poursuit par une étape **50034** de détermination de la table $\Delta NC(i, j) = NC_{shut}(i, j) - NC_{ref}(i, j)$ et de la moyenne algébrique $\overline{\Delta NC}$ de celle-ci.

Toujours en **50034,** la table $D(i, j) = \Delta NC(i, j) - \overline{\Delta NC}$ est calculée, et la valeur de résistance moyenne $\overline{R_{ac\_ref}}@T_{shut}$ est estimée comme précédemment décrit dans l'étape **30034** en utilisant la relation **(11),** l'ensemble de ces données étant mémorisé dans des tables correspondantes dans la mémoire **1002** de l'unité **100.**

De manière alternative plus précise, ce processus est enrichi par un sous-processus de détermination spatiale des résistances qui n'ont pas dérivé. Ce sous-processus exploite par exemple une comparaison des termes de la ou des dernière(s) table(s) de gains précédemment établies lors des itérations précédentes de mise à jour de la table de gains, comme il a été évoqué précédemment. La moyenne $\overline{\Delta NC^{ND}}$ des valeurs $\Delta NC(i, j)$ de ces résistances particulières est alors calculée en lieu et place de $\overline{\Delta NC}$.

Ensuite, en **50035,** les facteurs de correction au premier ordre $\alpha(i, j)$ et les facteurs de correction au second ordre $\beta(i, j)$ sont calculés et mémorisés par l'unité **100.** Optionnellement, l'unité **100** forme également les moyennes $\overline{\alpha}$ et $\overline{\beta}$ si une correction « deux points » utilisant une table de gains normalisée approximée selon la relation **(29)** est mise en oeuvre.

En **50036,** une nouvelle table de gains est alors calculée par l'unité **100.** Selon une première variante, la correction « deux points » est mise en oeuvre en utilisant une table de gains « exactement normalisée » calculée selon la relation **(28),** et l'unité **100** calcule une nouvelle table de gains selon cette relation. Selon une deuxième variante, la correction « deux points » est mise en oeuvre en utilisant une table de gains approximativement normalisée selon la relation **(29),** et l'unité **100** calcule une nouvelle table de gains selon cette relation.

Toujours en **50036,** optionnellement, l'unité **100** calcule une nouvelle responsivité moyenne $\overline{Resp_{shut}}$ selon la relation $\overline{Resp_{shut}} = \overline{Resp_{ref}} \cdot N$.

Le procédé se poursuit alors par l'étape **30037** de mise à jour des données de la mémoire **80** précédemment décrite.

Il n'est utilisé pour simplification des expressions qu'une température mesurée en un point du substrat. S'il est mis en oeuvre une pluralité de sondes de température en divers points du substrat, une forme tabulée des paramètres $T_{ref}$ et $T_{shut}$ sera typiquement utilisée partout où ces paramètres apparaissent. De même, la définition des conditions de mise à jour de la table de gains dépendantes de la température plan focal est basée sur l'exploitation d'un seul, de plusieurs, ou d'une combinaison de ces signaux de température plan focal entre eux ou avec d'autres paramètres.

Dans les premier et second modes de réalisation précédemment décrits, le calcul d'une nouvelle table de gains a été présenté sous une succession d'étapes élémentaires de calcul pour des raisons de clarté. Bien entendu, la nouvelle table de gains peut être calculée en une seule étape ou des étapes élémentaires peuvent être regroupées en une seule étape.

De même, ces modes présentent l'avantage de pouvoir utiliser une seule et unique table de gains pour la correction « deux points » et ceci pour tout le domaine de fonctionnement en température du détecteur. Si l'application le nécessite, plusieurs tables de gains peuvent être utilisées et mises à jour d'une manière analogue à celle décrite ci-dessus.

Il a été décrit des modes de réalisation dans lequel la table d'offsets est également mise à jour. La mise à jour de la table de gains nécessitant l'acquisition d'une table de signaux bruts correspondant à l'obturateur, cette table est avantageusement acquise pour mettre également à jour la table d'offsets. Toutefois, on comprendra que cette mise à jour de la table d'offsets, bien que privilégiée, est optionnelle. De même, la mise à jour de la table d'offsets par un simple remplacement de celle-ci n'est qu'une possibilité parmi d'autres. D'autres types de mise à jour de la table d'offsets peuvent être mis en oeuvre.

Il a été décrit des modes de réalisation utilisant un obturateur formant une scène sensiblement uniforme en rayonnement lorsqu'il est fermé. L'utilisation d'un obturateur permet non seulement l'obtention d'une telle scène indépendamment de l'environnement du détecteur, mais permet également d'obtenir une scène de température proche, du point de vue des bolomètres, de la température de ceux-ci et du substrat. En variante de chacun des modes de réalisation décrits précédemment, il n'est pas utilisé d'obturateur, et les signaux de lecture utilisés pour réaliser la correction de la table de gain sont ceux correspondants à une scène observée par le détecteur. Il convient cependant que cette scène soit sensiblement uniforme, ou rendue uniforme au niveau du plan focal par exemple au moyen d'une défocalisation de l'image, et de préférence à une température de l'ordre de celle du plan focal, typiquement distante de ladite température de moins de 20 °C.

La figure 6 est une image thermique obtenue à partir d'un détecteur bolométrique selon le second mode de réalisation dans les mêmes conditions opératoires que celles décrites en relation avec la figure 1. Comme on peut le constater, les taches foncées provenant d'une correction insuffisante de l'état de la technique sont à présent parfaitement corrigées.

Il résulte de ce qui précède les nombreux avantages de l'invention, parmi lesquels :

- une correction efficace des dérives des bolomètres liées à un changement intrinsèque de leur caractéristique, notamment suite à de fortes illuminations, et ce, sans faire appel à des procédures de calibration nécessitant un retour chez le constructeur ;
- la possibilité de n'utiliser qu'une seule et même table de gains pour tout le domaine de fonctionnement en température du détecteur ;
- une correction efficace des dérives des bolomètres, globales (affectant tous les pixels simultanément) ou locales (images dites rémanentes), que le détecteur soit ou non régulé en température ;
- la faculté d'utiliser le facteur de normalisation $N$ de la table de gains corrigée pour la correction de la calibration thermométrique de responsivité, même avec une simplification de la calibration en usine de responsivité moyenne à une seule température plan focal de référence ;
- la possibilité de mettre en oeuvre la correction des dérives locales, y compris sur des détecteurs qui ne mettent pas en oeuvre d'estimation des valeurs des résistances. Le procédé s'applique donc à ce type de détecteur déjà en service, au moyen de la mise à jour du processus de correction selon la méthode de l'invention ;
- en outre selon l'invention, les contributions aux variations de responsivité moyenne dues respectivement à la dérive globale ou locale des caractéristiques intrinsèques des bolomètres, et aux évolutions (dérive) de température du plan focal (pour les caméras à plan focal non régulées en température) sont connues indépendamment. Il est ainsi possible d'exploiter ces contributions indépendamment de manière avantageuse, par exemple pour fournir des informations particulières utiles à l'utilisateur de la caméra, déclencher des processus de mémorisation (logging) de la vie du système, déclencher des protocoles opératoires automatiques hors du champ de l'invention, autoriser des traitements de données particuliers également au-delà du champ de l'invention. On peut ainsi former des statistiques de datation, récurrence, intensité, densité et localisation spatiale des épisodes d'irradiation intense.

On notera également que les relations **(8)** et **(9)** permettant de déduire une variation d'énergie d'activation d'un bolomètre résistif en fonction d'une variation de sa résistance électrique peuvent faire l'objet de nombreuses autres applications.

Elles peuvent par exemple être utilisées dans des simulateurs numériques pour modéliser l'évolution de l'énergie d'activation des bolomètres à partir de données expérimentales.

Ces relations peuvent également faire l'objet de dispositifs de diagnostic pour déterminer le comportement de bolomètres pour une température donnée. En effet, en connaissant la résistance électrique et l'énergie d'activation initiales d'un bolomètre pour une température donnée, et en mesurant la résistance courante du bolomètre pour cette même température, il est possible de détecter de manière simple si des bolomètres ont fortement dérivé, par exemple suite à une irradiation intense, en calculant l'énergie d'activation courante à l'aide des relations **(8)** et **(9)** et en comparant la valeur calculée à la valeur initiale de l'énergie d'activation.

Il est ainsi possible de détecter les bolomètres ayant dérivé dans une rétine afin par exemple d'opérer un fenêtrage particulier dans les trames issues de cette rétine. Cette détection des bolomètres ayant dérivé peut ainsi avantageusement être mise en oeuvre dans le dispositif de correction des phénomènes de rémanence décrit dans le document WO 2010/037944 pour déterminer la zone de la rétine, ou fenêtre, sur laquelle s'applique la correction.

**Revendications**

1. Procédé de correction d'une table de gains utilisée dans une correction d'une dispersion en réponse de bolomètres résistifs (1011) d'une rétine de bolomètres résistifs (10) suspendue au dessus d'un substrat d'un détecteur bolométrique, ladite correction étant appliquée à des signaux bruts de lecture issus desdits bolomètres (1011), et chaque gain de la table de gains étant associé à un bolomètre de la rétine, le procédé consistant:

   - à acquérir (30032, 30033, 30034 ; 5003) des signaux de lecture de la rétine (10) correspondant à une scène sensiblement uniforme en température ;
   et **caractérisé en ce qu'**il consiste :

   - à calculer (30034, 30035 ; 50034, 50035) une table de correction g de la table de gain en fonction des signaux de lecture acquis selon la relation :

$$g(i,j) = \frac{R_{ac\_shut}(i,j)}{R_{ac\_ref}(i,j)} \cdot \frac{TCR_{ref}(i,j)}{TCR_{shut}(i,j)}$$

   - et à corriger (30036 ; 50036) la table de gains selon la relation:

$$G_{shut}(i,j) = \frac{g(i,j).G_{ref}(i,j)}{N}$$

   expressions dans lesquelles :

   - $(i, j)$ représentent les coordonnées des bolomètres dans la rétine et les tables ;
   - $G_{ref}$ et $G_{shut}$ sont respectivement la table de gains avant correction et la table de gains corrigée ;
   - $R_{ac\,shut}(i, j)$ est une valeur de la résistance du bolomètre de coordonnées $(i, j)$ à l'instant d'acquisition des signaux de lecture ;
   - $R_{ac\,ref}(i, j)$ est une valeur de la résistance du bolomètre de coordonnées $(i, j)$ à un instant antérieur ;
   - $TCR_{shut}(i, j)$ est une valeur du coefficient de variation en température du bolomètre de coordonnées $(i, j)$ à l'instant d'acquisition des signaux de lecture ;
   - $TCR_{ref}(i, j)$ est une valeur du coefficient de variation en température du bolomètre de coordonnées $(i, j)$ à l'instant antérieur ; et
   - $N$ est un facteur scalaire de normalisation de la table de gains $G_{shut}$.

2. Procédé de correction d'une table de gains selon la revendication 1, *caractérisé* :

   - **en ce que** le matériau bolométrique des bolomètres résistifs (1011) est du silicium amorphe ou un alliage de silicium-germanium,
   - **en ce que** les valeurs $R_{ac\_ref}(i, j)$ sont des valeurs de résistance des bolomètres (1011) pour une température moyenne $T_{ref}$ de ceux-ci, et
   - **en ce que** le terme $\beta(i,j) = \dfrac{TCR_{ref}(i,j)}{TCR_{shut}(i,j)}$ est calculé selon la relation :

$$\beta(i, j) = \frac{1}{1 + \dfrac{K}{E_{a\_ref}} \cdot \ln\left(\dfrac{R_{ac\_shut}(i, j)}{R_{ac\_ref}(i, j)@T_{shut}}\right)} \cdot \frac{T_{shut}^2}{T_{ref}^2}$$

expression dans laquelle :

- $T_{shut}$ est une température moyenne des bolomètres à l'instant d'acquisition des signaux ;
- $K$ est un coefficient prédéterminé dépendant des bolomètres résistifs ;
- $E_{a\_ref}$ est une valeur prédéterminée de l'énergie d'activation des bolomètres ;
- ln est le logarithme népérien ; et
- $R_{ac\_ref}(i, j)@T_{shut}$ est une valeur à l'instant antérieur de la résistance du bolomètre de coordonnées ($i$, $j$) pour la température $T_{shut}$.

3. Procédé de correction d'une table de gains selon la revendication 2, *caractérisé* :

- en ce que le signal de lecture de chaque bolomètre (1011) de la rétine (10) est une tension en sortie d'un intégrateur (202) intégrant dans un condensateur (2022) pendant une durée prédéterminée une différence entre un courant circulant dans le bolomètre (1011) soumis à une tension de polarisation constante et un courant de mode commun ;
- et en ce que le terme $\beta(i, j)$ est calculé selon la relation :

$$\beta(i, j) = \frac{1}{1 - \dfrac{K}{E_{a\_ref}(i, j)} \cdot \dfrac{C_{int} \cdot \overline{R_{ac\_ref}}@T_{shut}}{T_{int} \cdot V_{ac}} \cdot \left(\left(NC_{shut}(i, j) - NC_{ref}(i, j)\right) - \left(\overline{NC_{shut}} - \overline{NC_{ref}}\right)\right)} \cdot \frac{T_{shut}^2}{T_{ref}^2}$$

expression dans laquelle :

- $C_{int}$ est la valeur de la capacité du condensateur de l'intégrateur ;
- $T_{int}$ est la valeur de la durée d'intégration ;
- $V_{ac}$ est la valeur de la tension de polarisation appliquée au bolomètre lors de l'intégration ;
- $NC_{shut}(i, j)$ est la valeur du signal issu du bolomètre de coordonnées ($i$, $j$) à l'instant d'acquisition des signaux de lecture ;
- $NC_{ref}(i, j)$ est une valeur prédéterminée du signal de lecture issu du bolomètre à l'instant antérieur ;
- $\overline{NC_{shut}}$ est une valeur moyenne des signaux de lecture sur l'ensemble de la rétine ou sur une portion prédéterminée de celle-ci ;
- $\overline{NC_{ref}}$ est une valeur moyenne prédéterminée des signaux de lecture à l'instant antérieur ; et
- $\overline{R_{ac\_ref}}@T_{shut}$ est une valeur moyenne de valeurs de résistance $R_{ac\_ref}(i, j)@T_{shut}$ des bolomètres à l'instant antérieur pour la température $T_{shut}$.

4. Procédé de correction d'une table de gains selon la revendication 2 ou 3, *caractérisé* **en ce que** les bolomètres (1011) sont réalisés en silicium amorphe, et **en ce que** le coefficient $K$ est constant et sensiblement égal à 0,055 eV.

5. Procédé de correction d'une table de gains selon la revendication 2 ou 3, *caractérisé* **en ce que** plusieurs valeurs du coefficient $K$ sont mémorisées en fonction de températures respectives des bolomètres (1011), notamment une valeur sensiblement égale à 0,055 eV à la température de 30 °C pour des bolomètres réalisées en silicium amorphe, et **en ce qu'**une valeur du coefficient $K$ pour la température $T_{shut}$ à l'instant d'acquisition des signaux est déterminée en fonction desdites valeurs mémorisées.

6. Procédé de correction d'une table de gains selon l'une quelconque des revendications précédentes, *caractérisé* :

- en ce que le signal de lecture de chaque bolomètre (1011) de la rétine (10) est une tension en sortie d'un intégrateur (202) intégrant dans un condensateur (2022) pendant une durée prédéterminée une différence entre un courant circulant dans le bolomètre (1011) soumis à une tension de polarisation constante et un courant de

mode commun ;

$$\alpha(i,j) = \frac{R_{ac\_shut}(i,j)}{R_{ac\_ref}(i,j)}$$

- et en ce que le terme     est calculé selon la relation :

$$\alpha(i,j) = \frac{\exp\left(\frac{q.Ea_{ref}}{k}\left(\frac{1}{T_{shut}} - \frac{1}{T_{ref}}\right)\right)}{1 + \frac{C_{int}.\overline{R_{ac\_ref}@T_{shut}}}{T_{int}.V_{ac}}.\left(\left(NC_{shut}(i,j) - NC_{ref}(i,j)\right) - \left(\overline{NC_{shut}} - \overline{NC_{ref}}\right)\right)}$$

expression dans laquelle :

- $C_{int}$ est la valeur de la capacité du condensateur de l'intégrateur ;
- $T_{int}$ est la valeur de la durée d'intégration ;
- $V_{ac}$ est la valeur de la tension de polarisation appliquée au bolomètre lors de l'intégration ;
- $NC_{shut}(i,j)$ est la valeur du signal issu du bolomètre de coordonnées $(i, j)$ à l'instant d'acquisition des signaux de lecture ;
- $NC_{ref}(i,j)$ est une valeur prédéterminée du signal de lecture issu du bolomètre à l'instant antérieur ;
- $\overline{NC_{shut}}$ est une valeur moyenne des signaux de lecture sur l'ensemble de la rétine ou sur une portion prédéterminée de celle-ci ;
- $\overline{NC_{ref}}$ est une valeur moyenne prédéterminée des signaux de lecture à l'instant antérieur; et
- $\overline{R_{ac\_ref}@T_{shut}}$ est une valeur moyenne de valeurs de résistance $R_{ac\_ref}(i,j)@T_{shut}$ des bolomètres à l'instant antérieur pour la température $T_{shut}$.

7. Procédé de correction d'une table de gains selon l'une des revendications 3 à 6, *caractérisé* **en ce qu'**il comporte une étape d'identification (5003) des bolomètres (1011) de la rétine (10) ayant subi une dérive de leur caractéristique, et **en ce que** la valeur moyenne $\overline{NC_{shut}}$ des signaux de lecture est obtenue pour des signaux de lecture de bolomètres de la rétine n'ayant pas subi ladite dérive.

8. Procédé de correction d'une table de gains selon l'une quelconque des revendications 1 à 5, *caractérisé* **en ce que** le détecteur bolométrique est apte à mettre en oeuvre un calcul de la valeur $R_{ac\_shut}(i,j)$ de la résistance électrique de chaque bolomètre en fonction des signaux de lecture acquis.

9. Procédé de correction d'une table de gains selon l'une quelconques des revendications 2 à 8, *caractérisé* **en ce que** la valeur $R_{ac\_ref}(i,j)@T_{shut}$ de la résistance de coordonnées $(i, j)$ à l'instant antérieur pour la température $T_{shut}$ est déterminée selon la relation :

$$R_{ac\_ref}(i,j)@T_{shut} = R_{ac\_ref}(i,j).\exp\left(\frac{q.Ea_{ref}}{k}\left(\frac{1}{T_{shut}} - \frac{1}{T_{ref}}\right)\right)$$

où :

- $q$ est la charge élémentaire d'un électron ; et
- $k$ est la constante de Boltzmann.

10. Procédé de correction d'une table de gains selon l'une quelconque des revendications 2 à 9, *caractérisé* **en ce que** les bolomètres (1011) sont réalisés en silicium amorphe, et **en ce que** l'énergie d'activation $Ea_{ref}$ est sensiblement égale à 0,170 eV.

11. Procédé de correction d'une table de gains selon l'une quelconque des revendications précédentes, *caractérisé* **en ce que** le facteur scalaire $N$ est égal à la moyenne des termes $g(i,j).G_{ref}(i,j)$.

**12.** Procédé de correction d'une table de gains selon l'une quelconque des revendications précédentes, *caractérisé* en ce le détecteur comporte un obturateur (50) agencé devant la rétine (10), et en ce que les signaux de lecture de la rétine sont acquis lorsque l'obturateur est fermé.

**13.** Procédé de correction d'une table de gains selon l'une quelconque des revendications précédentes, *caractérisé* **en ce que** le détecteur est un détecteur non régulé en température, et **en ce que** le procédé comporte une étape de mesure (30033 ; 5033) de la température du détecteur à l'instant d'acquisition des signaux de lecture.

**14.** Procédé de correction d'une table de gains selon l'une quelconque des revendications précédentes, *caractérisé* **en ce qu'**il comprend en outre une étape de correction (30036 ; 50036) d'une responsivité moyenne du détecteur bolométrique utilisée dans un calcul thermométrique selon la relation $\overline{Resp_{shut}} = \overline{Resp_{ref}}N$, où $\overline{Resp_{shut}}$ est la responsivité moyenne corrigée, et $\overline{Resp_{ref}}$ est la responsivité moyenne du détecteur à l'instant antérieur.

**15.** Détecteur bolométrique comportant une rétine de bolomètres résistifs (10) réalisés en silicium amorphe ou en alliage de silicium-germanium, ladite rétine (10) étant suspendue au dessus d'un substrat, un circuit de formation de signaux (201, 202) pour la lecture de ladite rétine, et une unité de correction (70) des signaux délivrés par le circuit de formation des signaux (201, 202) apte à corriger ceux-ci en fonction d'une table de gains, *caractérisé* **en ce qu'**il comporte des moyens de correction (80, 100) de la table de gains apte à mettre en oeuvre un procédé conforme à l'une quelconque des revendications précédentes.

**Patentansprüche**

**1.** Korrekturverfahren einer Gewinntabelle, die in einer Dispersionskorrektur als Reaktion auf Widerstandsbolometer (1011) einer Matrix aus Widerstandsbolometern (10) verwendet wird, die über einem Substrat eines bolometrischen Detektors suspendiert sind, wobei die Korrektur auf Rohmesssignale von den besagten Bolometern (1011) angewendet wird und jeder Gewinn der Gewinntabelle einem Bolometer der Matrix zugeordnet ist, wobei das Verfahren folgendes umfasst:

- Erhebung (30032, 30033, 30034; 5003) retinaler Lesesignale (10), die einer im Wesentlichen gleichförmigen Temperaturszene entsprechen;

und **dadurch gekennzeichnet ist, dass** es aus folgenden Schritten besteht:

- Berechnung (30034, 30035; 50034, 50035) eine Korrekturtabelle g der Gewinntabelle gemäß den während der Kommunikation erhobenen Lesesignalen gemäß folgender Gleichung:

$$g(i,j) = \frac{R_{ac\_shut}(i,j)}{R_{ac\_ref}(i,j)} \cdot \frac{TCR_{ref}(i,j)}{TCR_{shut}(i,j)}$$

- und Korrektur (30036; 50036) der Gewinnbelle gemäß folgender Gleichung:

$$G_{shut}(i,j) = \frac{g(i,j).G_{ref}(i,j)}{N}$$

Wobei:

- *(i, J)* die Koordinaten der Bolometer in der Netzhaut und den Tabellen darstellen;
- $G_{ref}$ und $G_{shut}$ jeweils die Ergebnistabelle vor Korrektur und die korrigierte Ergebnistabelle sind;
- $R_{ac\_shut}(i,j)$ ein Wert des Widerstands des Koordinatenbolometers *(i,J) zum* Zeitpunkt der Erfassung der Lesesignale ist;
- $R_{ac\_ref}(i,j)$ ein Wert des Widerstands des Koordinatenbolometers *(i,J) zu einem* früheren Zeitpunkt ist;

- $TC_{shut}$ *(i, j)* ein Wert des Temperaturänderungskoeffizienten des Koordinatenbolometers *(i, J)* *zum* Zeitpunkt der Erfassung der Messsignale ist;
- $TCR_{ref}$ *(i,j)* ein Wert des Temperaturvariationskoeffizienten des Koordinatenbolometers *(ij)* zu einem früheren Zeitpunkt ist; und
- *N* ein skalarer Normalisierungsfaktor der $G_{shut}$-*Gewinntabelle ist.*

2. Korrekturverfahren einer Gewinntabelle gemäß Anspruch 1, **dadurch gekennzeichnet, dass**:

- das bolometrische Material der Widerstandsbolometer (1011) amorphes Silizium oder eine Silizium-Germanium-Legierung ist,
- die Werte $R_{ac\_ref}(i,j)$ Widerstandswerte der Bolometer (1011) für eine Durchschnittstemperatur $T_{ref}$ davon sind, und

$$\beta(i,j) = \frac{TCR_{ref}(i,j)}{TCR_{shut}(i,j)}$$

- der Ausdruck                                                                                                 entsprechend folgender Gleichung be-rechnet wird:

$$\beta(i,j) = \frac{1}{1 + \frac{K}{E_{a\_ref}} \cdot \ln\left(\frac{R_{ac\_shut}(i,j)}{R_{ac\_ref}(i,j)@T_{shut}}\right)} \cdot \frac{T_{shut}^2}{T_{ref}^2}$$

Wobei:

- $T_{shut}$ eine durchschnittliche Temperatur der Bolometer zum Zeitpunkt der Signalerfassung ist;
- $K$ ein vorgegebener Koeffizient in Abhängigkeit von den Widerstandsbolometern ist;
- $E_{a\_ref}$ ein vorgegebener Wert der Aktivierungsenergie der Bolometer ist;
- ln der neperische Logarithmus ist; und
- $R_{ac\_ref}(i,j)@ T_{shut}$ ein Wert des Widerstands des Koordinatenbolometers *(i, J)* für die Temperatur $T_{shut}$ zu einem früheren Zeitpunkt ist.

3. Korrekturverfahren einer Gewinntabelle gemäß Anspruch 2, gekennzeichnet:

- dass das Lesesignal jedes Bolometers (1011) der Matrix (10) eine Spannung am Ausgang eines Integrators (202) ist, der für eine vorbestimmte Zeit in einen Kondensator (2022) einer Differenz zwischen einem Strom, der in dem Bolometer (1011) fließt und einer konstanten Vorspannung ausgesetzt ist, und einem Gleichtaktstrom integriert;
- und dass der Begriff $\beta$ *(i,j)* gemäß nachfolgender Gleichung berechnet wird:

$$\beta(i,j) = \frac{1}{1 - \frac{K}{E_{a\_ref}(i,j)} \cdot \frac{C_{int} \cdot \overline{R_{ac\_ref}}@T_{shut}}{T_{int} \cdot V_{ac}} \cdot \left(\left(NC_{shut}(i,j) - NC_{ref}(i,j)\right) - \left(\overline{NC_{shut}} - \overline{NC_{ref}}\right)\right)} \cdot \frac{T_{shut}^2}{T_{ref}^2}$$

Wobei:

- $C_{int}$ der Wert der Kondensatorleistung des Integrators ist;
- $T_{int}$ der Wert der Integrationszeit ist;
- $V_{ac}$ der Wert der Polarisationsspannung, die während der Integration an das Bolometer angelegt wird ist;
- $NC_{shunt}(i,j)$ der Wert des Signals vom Koordinatenbolometer *(i, J)* zum Zeitpunkt der Erfassung der Lesesignale ist;
- $NC_{ref}(i,j)$ ein vorgegebener Wert des Messsignals des Bolometers zur vorherigen Zeit ist;
- $/NC_{shut}$ ein Mittelwert der Lesesignale über die gesamte Netzhaut oder einen vorbestimmten Teil davon ist;

- $INC_{ref}$ ein vorgegebener Mittelwert der gelesenen Signale zu der vorherigen Zeit; und
- $R_{ac\_ref}\,@T_{shut}$ ein Durchschnittswert der Widerstandswerte $R_{ac\_ref}(i,j)@T_{shut}$ von Bolometern zur vorherigen Zeit für die Temperatur $T_{shut}$ ist.

4. Korrekturverfahren einer Gewinntabelle gemäß Anspruch 2 oder 3, **dadurch gekennzeichnet, dass** die Bolometer (1011) aus amorphem Silizium hergestellt sind und dass der Koeffizient K konstant und im Wesentlichen gleich 0,055 eV ist.

5. Korrekturverfahren einer Gewinntabelle gemäß Anspruch 2 oder 3, **dadurch gekennzeichnet, dass** mehrere Werte des $K$-Koeffizienten in Abhängigkeit von den jeweiligen Temperaturen der Bolometer (1011) gespeichert werden, insbesondere ein Wert, der bei der Temperatur von 30°C für Bolometer aus amorphem Silizium im Wesentlichen gleich 0,055 eV ist, und dass ein Wert des $K$-Koeffizienten für die Temperatur $T_{shut}$ zum Zeitpunkt der Signalerfassung gemäß den gespeicherten Werten bestimmt wird.

6. Verfahren zum Korrigieren einer Zahlungstabelle gemäß einem der vorhergehenden Ansprüche, **dadurch gekennzeichnet:**

- **dass** das Lesesignal jedes Bolometers (1011) der Matrix (10) eine Spannung am Ausgang eines Integrators (202) ist, der für eine vorbestimmte Zeit in einem Kondensator (2022) einer Differenz zwischen einem Strom, der in dem Bolometer (1011) fließt und einer konstanten Vorspannung ausgesetzt ist, und einem Gleichtaktstrom integriert;
und **dass** der Begriff

$$\alpha(i,j)=\frac{R_{ac\_shut}(i,j)}{R_{ac\_ref}(i,j)}$$

*nach folgender Gleichung berechnet wird:*

$$\alpha(i,j)=\frac{\exp\left(\dfrac{q.Ea_{ref}}{k}\left(\dfrac{1}{T_{shut}}-\dfrac{1}{T_{ref}}\right)\right)}{1+\dfrac{C_{int}.\overline{R_{ac\_ref}}\,@T_{shut}}{T_{int}.V_{ac}}.\left(\left(NC_{shut}(i,j)-NC_{ref}(i,j)\right)-\left(\overline{NC_{shut}}-\overline{NC_{ref}}\right)\right)}$$

Wobei:

- $C_{int}$ der Wert der Kondensatorleistung des Integrators ist;
- $T_{int}$ der Wert der Integrationszeit ist;
- $V_{ac}$ der Wert der Polarisationsspannung, die während der Integration an das Bolometer angelegt wird ist;
- $NC_{shunt}(ij)$ der Wert des Signals vom Koordinatenbolometer *(i, J)* zum Zeitpunkt der Erfassung der Lesesignale ist;
- $NC_{ref}(i,j)$ ein vorgegebener Wert des Messsignals des Bolometers zur vorherigen Zeit ist;
- $INC_{shut}$ ein Mittelwert der Lesesignale über die gesamte Netzhaut oder einen vorbestimmten Teil davon ist;
- $INC_{ref}$ ein vorgegebener Mittelwert der gelesenen Signale zu der vorherigen Zeit; und
- $R_{ac\_ref}\,@T_{shut}$ ein Durchschnittswert der Widerstandswerte $R_{ac\_ref}(i,j)@T_{shut}$ von Bolometern zur vorherigen Zeit für die Temperatur $T_{shut}$ ist.

7. Korrekturverfahren einer Gewinntabelle gemäß einem der Ansprüche 3 bis 6, **dadurch gekennzeichnet, dass** es einen Schritt zum Identifizieren (5003) von Bolometern (1011) der Matrix (10) nach einer Abweichung ihrer Eigenschaft umfasst, und dass der Mittelwert $INC_{shut}$ der Lesesignale zum Lesen von Signalen von Matrixbolometern erhalten wird, die diese Abweichung nicht durchlaufen haben.

8. Korrekturverfahren einer Gewinntabelle gemäß einem der Ansprüche 1 bis 5, **dadurch gekennzeichnet, dass** der bolometrische Detektor geeignet ist, eine Berechnung des $R_{ac\_shut}(i,j)$-*Wertes des* elektrischen Widerstands jedes Bolometers in Abhängigkeit von den erfassten Messsignalen durchzuführen.

9. Korrekturverfahren einer Gewinntabelle gemäß einem der Ansprüche 2 bis 8, **dadurch gekennzeichnet, dass** der Wert $R_{ac\_ref}(i,j)@T_{shut}$ des Koordinatenwiderstandes *(i,J) zum* vorherigen Zeitpunkt für die Temperatur $T_{shut}$ gemäß nachfolgender Gleichung bestimmt wird:

$$R_{ac\_ref}(i,j)@T_{shut} = R_{ac\_ref}(i,j).\exp\left(\frac{q.Ea_{ref}}{k}\left(\frac{1}{T_{shut}} - \frac{1}{T_{ref}}\right)\right)$$

*Wo:*

- *q* die Elementarladung eines Elektrons und
- *k* die Boltzmann-Konstante ist.

10. Korrekturverfahren einer Gewinntabelle gemäß einem der Ansprüche 2 bis 9, **dadurch gekennzeichnet, dass** die Bolometer (1011) aus amorphem Silizium bestehen und dass die Aktivierungsenergie $Ea_{ref}$ im Wesentlichen gleich 0,170 eV ist.

11. Korrekturverfahren einer Gewinntabelle gemäß einem der vorhergehenden Ansprüche, **dadurch gekennzeichnet, dass** der Skalarfaktor *N* gleich dem Durchschnitt der Begriffe $g(i,j).G_{ref}(i,j)$ ist.

12. Korrekturverfahren einer Gewinntabelle gemäß einem der oben erwähnten Ansprüche, **dadurch gekennzeichnet, dass** der Detektor einen Verschluss (50) umfasst, der vor der Matrix (10) angeordnet ist, und dass die retinalen Lesesignale erfasst werden, wenn der Verschluss geschlossen wird.

13. Korrekturverfahren einer Gewinntabelle gemäß einem der vorhergehenden Ansprüche, **dadurch gekennzeichnet, dass** der Detektor ein ungesteuerter Temperaturdetektor ist, und dass das Verfahren einen Schritt zum Messen (30033; 5033) der Temperatur des Detektors zum Zeitpunkt der Erhebung der gelesenen Signale umfasst.

14. Korrekturverfahren einer Gewinntabelle gemäß einem der vorhergehenden Ansprüche, **dadurch gekennzeichnet, dass** es ferner den Schritt der Korrektur (30036; 50036) einer durchschnittlichen Reaktivität des bolometrischen Detektors umfasst, der in einer thermometrischen Berechnung gemäß der Beziehung $\overline{Re\,sp_{shut}} = \overline{Re\,sp_{ref}}.N$, verwendet wird, wobei $Resp_{shut}$ die korrigierte durchschnittliche Empfindlichkeit, und $Resp_{ref}$ die durchschnittliche Empfindlichkeit des Detektors zum früheren Zeitpunkt ist.

15. Bolometrischer Detektor, umfassend:

- eine Matrix von Widerstandsbolometern (10) aus amorphem Silizium oder einer Silizium-Germanium-Legierung, wobei die Matrix (10) über einem Substrat suspendiert ist,
- eine Signalbildungsschaltung (201, 202) zum Lesen der Matrix, und
- eine Korrektureinheit (70) für die von der Signalbildungsschaltung (201, 202) gelieferten Signale, geeignet, um sie in Abhängigkeit von einer Gewinntabelle zu korrigieren, **dadurch gekennzeichnet, dass** sie Mittel (80, 100) zum Korrigieren der Gewinntabelle beinhaltet, die geeignet sind, einen Prozess gemäß einem der vorhergehenden Ansprüche durchzuführen.

**Claims**

1. A method for correcting a gain table used in a correction of a response dispersion of resistive bolometers (1011) of a resistive bolometer retina (10) suspended above a substrate of a bolometric detector, said correction being applied to raw read signals provided by said bolometers (1011), and each gain of the gain table being associated with a bolometer of the retina, the method comprising acquiring (30032, 30033, 30034; 5003) read signals from the retina (10) corresponding to a substantially temperature-uniform scene, **characterized in that** said method comprises :

   ▪ calculating (30034, 30035; 50034, 50035) a table g for correcting the gain table according to the acquired read signals according to relation:

$$g(i,j) = \frac{R_{ac\_shut}(i,j)}{R_{ac\_ref}(i,j)} \cdot \frac{TCR_{ref}(i,j)}{TCR_{shut}(i,j)}$$

- and correcting (30036; 50036) the gain table according to relation:

$$G_{shut}(i,j) = \frac{g(i,j) \cdot G_{ref}(i,j)}{N}$$

where

- $(i, j)$ represent the coordinates of the bolometers in the retina and the tables;
- $G_{ref}$ and $G_{shut}$ respectively are the gain table before correction and the corrected gain table;
- $R_{ac\_shut}(i, j)$ is a value of the resistance of the bolometer of coordinates $(i, j)$ at the time of acquisition of the read signals;
- $R_{ac\_ref}(i, j)$ is a value of the resistance of the bolometer of coordinates $(i, j)$ at a previous time;
- $TCR_{shut}(i, j)$ is a value of the temperature variation coefficient of the bolometer of coordinates $(i, j)$ at the time of acquisition of the read signals;
- $TCR_{ref}(i, j)$ is a value of the temperature variation coefficient of the bolometer of coordinates $(i, j)$ at the previous time; and
- $N$ is a scalar factor for normalizing gain table $G_{shut}$.

2. The gain table correction method of claim 1, *characterized in that*:

- the bolometric material of the resistive bolometers (1011) is amorphous silicon or a silicon-germanium alloy,
- values $R_{ac\_ref}(i, j)$ are resistance values of the bolometers (1011) for an average temperature $T_{ref}$ thereof, and
- term $\beta(i,j) = \dfrac{TCR_{ref}(i,j)}{TCR_{shut}(i,j)}$ is calculated according to relation:

$$\beta(i,j) = \frac{1}{1 + \dfrac{K}{E_{a\_ref}} \cdot \ln\left(\dfrac{R_{ac\_shut}(i,j)}{R_{ac\_ref}(i,j)@T_{shut}}\right)} \cdot \frac{T_{shut}^2}{T_{ref}^2}$$

where:

- $T_{shut}$ is an average temperature of the bolometers at the time of acquisition of the signals;
- $K$ is a predetermined coefficient depending on the resistive bolometers;
- $E_{a\_ref}$ is a predetermined value of the bolometer activation energy;
- ln is the natural logarithm; and
- $R_{ac\_ref}(i, j)@T_{shut}$ is a value at the previous time of the resistance of the bolometer of coordinates $(i, j)$ for temperature $T_{shut}$.

3. The gain table correction method of claim 2, *characterized in that:*

- the read signal of each bolometer (1011) of the retina (10) is an output voltage of an integrator (202) integrating in a capacitor (2022) for a predetermined time period a difference between a current flowing through the bolometer (1011) submitted to a constant bias voltage and a common-mode current;
- and **in that** term $\beta(i, j)$ is calculated according to relation:

$$\beta(i, j) = \cfrac{1}{1 - \cfrac{K}{E_{a\_ref}(i, j)} \cdot \cfrac{C_{\text{int}} \cdot \overline{R_{ac\_ref} @ T_{shut}}}{T_{\text{int}} \cdot V_{ac}} \cdot \left( \left( NC_{shut}(i, j) - NC_{ref}(i, j) \right) - \left( \overline{NC_{shut}} - \overline{NC_{ref}} \right) \right)} \cdot \cfrac{T_{shut}^2}{T_{ref}^2}$$

where:

- $C_{\text{int}}$ is the capacitance value of the integrator capacitor;
- $T_{\text{int}}$ is the value of the integration time;
- $V_{ac}$ is the value of the bias voltage applied to the bolometer during the integration;
- $NC_{shut}(i, j)$ is the value of the signal provided by the bolometer of coordinates $(i, j)$ at the time of acquisition of the read signals;
- $NC_{ref}(i, j)$ is a predetermined value of the read signal provided by the bolometer at the previous time;
- $\overline{NC_{shut}}$ is an average value of the read signals all over the retina or on a predetermined portion thereof;
- $\overline{NC_{ref}}$ is a predetermined average value of the read signals at the previous time; and
- $\overline{R_{ac-ref}} @ T_{shut}$ is an average value of resistance values $R_{ac\_ref}(i, j) @ T_{shut}$ of the bolometers at the previous time for temperature $T_{shut}$.

4. The gain table correction method of claim 2 or 3, ***characterized in that*** the bolometers (1011) are made of amorphous silicon, and **in that** coefficient $K$ is constant and substantially equal to 0.055 eV.

5. The gain table correction method of claim 2 or 3, ***characterized in that*** several values of coefficient $K$ are stored according to respective temperatures of the bolometers (1011), especially a value substantially equal to 0.055 eV at the 30°C temperature for bolometers made of amorphous silicon and **in that** a value of coefficient $K$ for temperature $T_{shut}$ at the time of acquisition of the signals is determined according to said stored values.

6. The gain table correction method of any of the foregoing claims, ***characterized in that:***

- the read signal of each bolometer (1011) of the retina (10) is an output voltage of an integrator (202) integrating in a capacitor (2022) for a predetermined time period a difference between a current flowing through the bolometer (1011) submitted to a constant bias voltage and a common-mode current;

$$\alpha(i, j) = \frac{R_{ac\_shut}(i, j)}{R_{ac\_ref}(i, j)}$$

- and term is calculated according to relation:

$$\alpha(i, j) = \cfrac{\exp\left( \cfrac{q.Ea_{ref}}{k} \left( \cfrac{1}{T_{shut}} - \cfrac{1}{T_{ref}} \right) \right)}{1 + \cfrac{C_{\text{int}} \cdot \overline{R_{ac\_ref} @ T_{shut}}}{T_{\text{int}} \cdot V_{ac}} \cdot \left( \left( NC_{shut}(i, j) - NC_{ref}(i, j) \right) - \left( \overline{NC_{shut}} - \overline{NC_{ref}} \right) \right)}$$

where:

- $C_{\text{int}}$ is the capacitance value of the integrator capacitor;
- $T_{\text{int}}$ is the value of the integration time;
- $V_{ac}$ is the value of the bias voltage applied to the bolometer during the integration;
- $NC_{shut}(i, j)$ is the value of the signal provided by the bolometer of coordinates $(i, j)$ at the time of acquisition of the read signals;
- $NC_{ref}(i, j)$ is a predetermined value of the read signal provided by the bolometer at the previous time;
- $\overline{NC_{shut}}$ is an average value of the read signals over the entire retina or on a predetermined portion thereof;
- $\overline{NC_{ref}}$ is a predetermined average value of the read signals at the previous time; and
- $\overline{R_{ac-ref}} @ T_{shut}$ is an average value of resistance values $R_{ac\_ref}(i, j) @ T_{shut}$ of the bolometers at the previous time for temperature $T_{shut}$.

**7.** The gain table correction method of any of claims 3 to 6, ***characterized in that*** it comprises a step of identification (5003) of the bolometers (1011) of the retina (10) having undergone a drift of their characteristic, and **in that** average value $\overline{NC_{shut}}$ of the read signals is obtained for read signals of bolometers of the retina which have not undergone said drift.

**8.** The gain table correction method of any of claims 1 to 5, ***characterized in that*** the bolometric detector is capable of implementing a calculation of value $R_{ac\_shut}(i, j)$ of the electric resistance of each bolometer according to the acquired read signals.

**9.** The gain table correction method of any of claims 2 to 8, ***characterized in that*** value $R_{ac\_ref}(i, j)@T_{shut}$ of the resistance of coordinates $(i, j)$ at the previous time for temperature $T_{shut}$ is determined according to relation:

$$R_{ac\_ref}(i,j)@T_{shut} = R_{ac\_ref}(i,j).\exp\left(\frac{q.Ea_{ref}}{k}\left(\frac{1}{T_{shut}} - \frac{1}{T_{ref}}\right)\right)$$

where:

- $q$ is the elementary charge of an electron: and
- $k$ is Boltzmann's constant.

**10.** The gain table correction method of any of claims 2 to 9, ***characterized in that*** the bolometers (1011) are made of amorphous silicon, and **in that** activation energy $Ea_{ref}$ is substantially equal to 0.170 eV.

**11.** The gain table correction method of any of the foregoing claims, ***characterized in that*** scalar factor $N$ is equal to the average of terms $g(i, j).G_{ref}(i, j)$.

**12.** The gain table correction method of any of the foregoing claims, ***characterized in that*** the detector comprises a shutter (50) arranged in front of the retina (10) and **in that** the retina read signals are acquired when the shutter is closed.

**13.** The gain table correction method of any of the foregoing claims, ***characterized in that*** the detector is a detector with a non-regulated temperature and **in that** the method comprises a step of measurement (30033; 5033) of the detector temperature at the time of acquisition of the read signals.

**14.** The gain table correction method of any of the foregoing claims, ***characterized in that*** it further comprises a step (30036; 50036) of correction of an average responsiveness of the bolometric detector used in a thermometric calculation according to relation $\overline{Re\,sp_{shut}} = \overline{Re\,sp_{ref}}.N$, where $\overline{Re\,sp_{shut}}$ is the corrected average responsiveness, and $\overline{Re\,sp_{ref}}$ is the average responsiveness of the detector at the previous time.

**15.** A bolometric detector comprising a retina (10) of resistive bolometers made of amorphous silicon or of a silicon-germanium alloy, said retina (10) being suspended above a substrate, a circuit for forming signals (201, 202) for the reading of said retina, and a unit for correcting (70) the signals delivered by the signal-forming circuit (201, 202) capable of correcting them according to a gain table, ***characterized in that*** it comprises means for correcting (80,100) the gain table capable of implementing the method of any of the foregoing claims.

Fig. 1

Fig. 6

**Fig. 2**

**Fig. 3**

Fig. 4

**Fig. 5**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2936052
- US 7030378 B
- WO 2010037944 A

**Littérature non-brevet citée dans la description**

- Uncooled amorphous silicon enhancement for $25\mu$m pixel pitch achievement. **E. MOTTIN et al.** Infrared Technology and Application XXVIII. SPIE, vol. 4820